# EUROPÄISCHE PATENTSCHRIFT

(11) **EP 2 706 159 B1**
(45) Veröffentlichungstag und Bekanntmachung des Hinweises auf die Patenterteilung: **03.11.2021**
(21) Anmeldenummer: 12006368.0
(22) Anmeldetag: 11.09.2012
(51) Int. Cl.: E04B 1/76

(54) **VERFAHREN ZUR VERMINDERUNG ODER ZUM UNTERBINDEN VON FEUCHTE- UND/ODER SCHIMMELBILDUNG BZW. -SCHADEN IN WÄRMEGEDÄMMTEN BEREICHEN SOWIE VOR FEUCHTE- UND/ODER SCHIMMELBILDUNG BZW. -SCHADEN GESCHÜTZTE GEBÄUDE UND GEBÄUDETEILE**
METHOD FOR REDUCING OR PREVENTING MOISTURE AND/OR MOULD FORMATION OR DAMAGE IN THERMALLY INSULATED AREAS, AND BUILDINGS AND PARTS OF BUILDINGS PROTECTED FROM MOISTURE AND/OR MOLD FORMATION OR DAMAGE
PROCÉDÉ DESTINÉ À RÉDUIRE OU ÉLIMINER LES DÉGÂTS OU FORMATIONS DE MOISISSURES ET/OU D'HUMIDITÉ DANS DES ZONES À ISOLATION THERMIQUE, ET LES BATIMENTS ET PARTIES DE BATIMENTS PROTEGES CONTRE LES DÉGÂTS OU FORMATIONS DE MOISISSURES ET/OU D'HUMIDITÉ

(43) Veröffentlichungstag der Anmeldung: 12.03.2014
(73) Patentinhaber: DAW SE, 64372 Ober-Ramstadt (DE)
(72) Erfinder: Lohmann, Thomas, Dr., 68526 Ladenburg (DE); Lickert, Andrea, 64295 Darmstadt (DE)
(74) Vertreter: Metten, Karl-Heinz

(56) Entgegenhaltungen:
- DE-A1-102007 062 068
- US-A1- 2011 289 876

## Beschreibung

Die vorliegende Erfindung betrifft ein Verfahren zur Verminderung oder zum Unterbinden von Feuchte- und/oder Schimmelbildung bzw. -schäden in wärmegedämmten Bereichen sowie vor Feuchte- und/oder Schimmelbildung bzw. -schäden geschützte Gebäude und Gebäudeteile.

Nicht zuletzt aufgrund des stetigen Anstiegs der Energiekosten gewinnt die Wärmedämmung von Gebäuden mehr und mehr an Bedeutung. Mit einer fachmännisch angebrachten Außen- oder Innenwärmedämmung lassen sich signifikante Einsparungen beim Energieverbrauch erzielen. Eine verbesserte Außenwärmedämmung umfasst in der Regel sowohl die Anbringung von Wärmedämmmaterialien auf den Außenwänden wie auch im Bereich des Daches. Ein Vorteil der Wärmedämmung von Außenfassaden von Gebäuden ist, dass eine vollständige Ummantelung eines Gebäudes gelingt, ohne dass, jedenfalls bei fachmännischer Ausführung, Wärmebrücken verbleiben, welche die Dämmleistung erheblich mindern können. Neben einer hervorragenden Dämmung gegen Kälte und Hitze kann durch Ausbildung einer äußeren Wärmedämmschicht verbunden mit einem Putz eine robuste und alterungsbeständige Oberfläche geschaffen werden. Auch erhält ein derart wärmegedämmtes Gebäude ein neuwertiges Aussehen. Die Anbringung einer Wärmedämmung auf der Außenfassade dient damit sowohl dem Schutz der Bausubstanz als auch der Erhaltung bzw. Wertsteigerung eines Gebäudes.

Von Vorteil bei der Außendämmung ist ferner, dass Probleme wie Tauwasser- und Schimmelbildung in Innenräumen bei Beachtung handwerklicher Sorgfalt ausgeschlossen werden können, dass die bewohnbare Raumfläche nicht verringert wird und dass nicht nur der Wärmeverlust im Winter reduziert, sondern ebenfalls die Aufheizung der Räume im Sommer gedämpft wird. Durch diese Dämpfung der jahreszeitlichen Temperaturschwankungen können Bauschäden infolge temperaturbedingter Spannungen zurückgedrängt werden.

Zwar lässt sich eine Fassadendämmung schnell und einfach montieren, allerdings kann eine solche Außendämmung einer Austrocknung von Mauerwerken und Putz entgegenstehen und zu Problemen führen. Außerdem ist häufig nicht gewünscht, die äußere Gestalt des Hauses durch Anbringung einer Außendämmung zu verändern, beispielsweise weil aufgrund der ohnehin geringen Fenstergröße durch Anbringung der mitunter recht dicken Wärmedämmung eine nochmalige Verengung der Fensteröffnung eintreten würde. Auch werden diese Fenster dann als zu weit innenliegend wahrgenommen. Darüber hinaus können auch Denkmalschutz- bzw. Ensembleschutz-Vorgaben der Anbringung einer Außendämmung entgegenstehen. Ferner kann durch die Anbringung einer Fassadendämmung der gesetzlich vorgeschriebene Abstand zum Nachbargrundstück bzw. Straßenrand unterschritten werden, was rechtliche Komplikationen mit sich bringen kann. Überdies sind Änderungen der Außenfassade mitunter genehmigungspflichtig bzw. müssen mit den Nachbarn abgestimmt werden.

Aus den genannten Gründen wird verstärkt auf die Dämmung von Innenräumen zurückgegriffen. Für eine vollständige Dämmung sind in der Regel nicht nur die Wände, sondern ebenfalls die Fußböden und die Decken mit einer geeigneten Dämmung zu versehen. Da, anders als bei der Außendämmung, regelmäßig keine Gerüste oder andere vorbereitenden Arbeiten für die Innenraumdämmung nötig sind, ist die Dämmung von Innenräumen im Allgemeinen leichter durchzuführen und auch kostengünstiger. Auch ist man bei der Anbringung der Innenraumdämmung unabhängig von Witterungseinflüssen, welche mitunter die Anbringung einer Wärmedämmung auf der Außenfassade nachhaltig beeinträchtigen können.

Als Nachteil bei der Innenraumdämmung wird jedoch häufig empfunden, dass damit eine reduzierte Wohnfläche einhergeht und dass Wärmebrücken nicht vermieden werden können. Außerdem kann eine Innenraumdämmung dazu führen, dass an oder in den Außenwänden verlegte Wasserleitungen im Winter einfrieren. Darüber hinaus wird häufig als kritisch empfunden, dass mit der Innendämmung eine Reduzierung der Temperaturen des Mauerwerks einhergeht, wodurch Feuchtigkeit der Raumluft am kalten Mauerwerk kondensieren kann. Dieses Tauwasser kann wiederum zu Schimmelbildung und Bauschäden führen. Die durch Tauwasser bedingte Schimmelbildung kann bei unsachgemäßer Anbringung der Innendämmung sowohl an dem hinter der Dämmung liegenden kalten Mauerwerk auftreten als auch im Bereich des Übergangs von Innenraumwärmedämmung zu einbindenden Bauteilen wie einbindenden Wänden, Decken oder Böden. Hier liegen sogenannte Wärmebrücken vor. Über diese Wärmebrücken fließt Wärme aus dem Innenraum nach außen. Wärmebrücken treten regelmäßig bei sogenannten einbindenden Bauteilen wie Wänden und Decken auf. Dieses führt in den Raumecken zu einer niedrigeren Oberflächentemperatur der einbindenden Bauteile. Je besser man hierbei die Außenwand innenseitig wärmedämmt, umso weiter sinken die Oberflächentemperaturen in den Raumecken, die durch die innenseitig gedämmte Außenwand und ein einbindendes Bauteil gebildet werden, ab. In diesen Bereichen ist folglich die Gefahr von Tauwasser- und Schimmelbildung erhöht. Um Tauwasserbildung am kalten Mauerwerk zu verhindern, greift man z.B. auf feuchteunempfindliche Dämmstoffe, sogenannte Dampfsperren, oder auch auf sogenannte Kapillardämmplatten zurück.

Die geschilderten Nachteile der Innenraumwärmedämmung sind lange bekannt und haben ihren Niederschlag gefunden in hygienischen Mindestwärmeschutzanforderungen gemäß DIN 4108, Teil 2.

Um im Übergangs- bzw. Eckbereich von einbindenden Bauteilen zur innenseitig wärmegedämmten Außenwand Feuchte- bzw. Schimmelbildung zu vermeiden, führt man häufig die Innenraumwärmedämmung entlang des einbindende Bauteils über eine Länge von bis zu einem Meter fort. Auch werden in den Ecken von innenseitig wärmegedämmter Außenwand und einbindendem Bauteil, beispielsweise einbindender Wand, Dämmstoffkeile angebracht. Diese Dämmkeile oder Dämmplatten haben üblicherweise eine Dicke von 30 bis 50 mm und eine Länge von 300 bis 500 mm. Die Durchführung dieser zusätzlichen Maßnahmen verlangt eine äußerst sachgerechte handwerkliche Ausführung, womit nicht geringe Zusatzkosten einhergehen. Dabei wird der an der einbindenden Decke bzw. der einbindenden Wand angebrachte unansehnliche Dämmmaterialversatz regelmäßig als äußerst störend empfunden, da er sich nicht kaschieren lässt. Das Gleiche trifft auf die genannten Dämmkeile zu. Diese Maßnahmen führen bislang häufig dazu, dass auf eine Innenraumdämmung entweder vollständig verzichtet wird oder dass man aus optischen Gründen nur eine relativ dünne Wärmedämmung innenseitig anbringt, welche jedoch nicht zu nachhaltigen Energieeinsparungen führt.

Im Allgemeinen geht man davon aus, dass es dann zur Schimmelbildung kommt, wenn die relative Luftfeuchtigkeit dicht an der Wandoberfläche für längere Zeit 80 % oder mehr beträgt. Beispielsweise erhält man nahe einer 16°C kalten Raumecke eine relative Luftfeuchtigkeit von etwa 88 %, wenn in der Raummitte bei einer Temperatur von 21°C eine relative Luftfeuchtigkeit von 65 % vorliegt.

Die DE 10 2007 062 068 A1 betrifft ein Innendämmsystem für Gebäude umfassend eine Verkleidungsplatte zur raumseitigen Verkleidung einer Gebäudewand, die durch Abstandselemente in Form von Metallprofilen mit vorgegebenem Abstand zur entsprechenden Gebäudewand angeordnet ist, sowie aus Mineralwolle gebildete Dämmelemente, die zwischen Verkleidungsplatte und die Gebäudewand eingebracht sind. Hierbei ist für die Eckenverkleidung ein vorgefertigtes Eckendämmelement für die Eckendämmung vorgesehen, welches aus Dämmstoff gebildet ist und ein- oder beidseitig für den Anschluss der Verkleidungsplatte ausgebildet ist. Hierdurch soll ein Innendämmsystem für Gebäude zur Verfügung gestellt werden, welches eine vorteilhafte Wärmedämmung im Eckbereich gewährleistet und in der Praxis in einfacher Art und Weise aufgebaut werden kann.

Die Offenbarung der US 2011/0289876 A1 ist auf einen mit einem isolierenden Material versehenes metallisches Profil gerichtet, das sich durch eine bessere Wärmedämmung auszeichnen soll, bestehend aus einem länglichen Steg und einem länglichen Flansch, der sich quer von dem Steg erstreckt. Der längliche Flansch hat über erste und zweite Rippen entlang seiner Länge zu verfügen und ferner einen versetzten Abschnitt aufzuweisen, der seitlich nach innen von den ersten und zweiten Rippen beabstandet ist. Hierbei hat sich der versetzte Abschnitt zwischen den ersten und zweiten Rippen ungefähr über die gesamte Breite des länglichen Flansches entlang der Länge des metallischen Profils zu erstrecken, und das isolierende Material hat im Wesentlichen den versetzten Teil des länglichen Flansches zu bedecken.

Es wäre wünschenswert, auf innenseitige Wärmedämmungen für z.B. Gebäudeinnenräume zurückgreifen zu können, ohne dabei die vorangehend genannten Nachteile in Kauf nehmen zu müssen. Der vorliegenden Erfindung lag daher die Aufgabe zugrunde, eine verbesserte Wärmedämmung von wärmegedämmten Bereichen, z.B. Innenräumen zur Verfügung zu stellen, die nicht mehr oder weniger ausgeprägt zu Feuchte- und/oder Schimmelbildung führt.

Die der Erfindung zugrunde liegende Aufgabe wird gelöst durch ein Gebäude oder einen Bestandteil hiervon, umfassend die Merkmale des Patentanspruchs 1.

Ferner wird die der Erfindung zugrunde liegende Aufgabe wird gelöst durch ein Verfahren gemäß den Merkmalen des Patentanspruchs 12.

Der Begriff einbindendes Bauteil ist dem Fachmann hinlänglich bekannt. Eine einbindende Wand stellt beispielsweise regelmäßig eine Wand dar, die Bestandteil eines Innenraums ist bzw. diesen mit bildet und die gleichzeitig in einen Wärmefluss ermöglichenden Kontakt mit einer Wand (erste Wand) steht, d.h. mit dieser fest verbunden ist, welche zumindest zeitweise über eine kältere Außenseite verfügt, beispielsweise eine Gebäudeaußenwand. Entsprechendes gilt für einbindende Bauteile wie einbindende Decke und einbindenden Boden. Ein einbindendes Bauteil im Sinne der Erfindung umfasst auch einen Träger, der mit der ersten Wand in einen Wärmefluss ermöglichenden Kontakt steht.

Die erste Wand verfügt über eine erste Seite, in der Regel die Außenseite, welche im Allgemeinen wesentlich häufiger, z.B. aufgrund jahreszeitlicher Witterungsbedingungen, kälter ist als die gegenüberliegende zweite Seite, die mit der ersten Wärmedämmung ausgestattet ist. Hierbei muss es sich nicht notwendiger Weise immer um eine Gebäudeaußenwand handeln. Auch im Gebäudeinneren sind erste Wände im Sinne der Erfindung anzutreffen, beispielsweise als Abgrenzungswand eines unbeheizten Flurs, von dem man in gegebenenfalls beheizte bzw. beheizbare Räume gelangen kann.

Die erste Wärmedämmung muss nicht zwangsläufig durchgängig aus einem einzigen Material gefertigt sein. Es ist auch möglich, die erste Wärmedämmung aus einer Vielzahl identischer oder unterschiedlicher Wärmedämmkomponenten zu bilden. Eine erste Wärmedämmung im Sinne der Erfindung umfasst demgemäß auch eine durchgehende Wärmedämmung, z.B. eine Wärmedämmplatte, an die man ein weiteres Wärmedämmmaterial angefügt, beispielsweise angespritzt oder angeklebt hat. Beispielsweise kann es vorkommen, dass eine ersten Wärmedämmung, die sich im Wesentlichen bis zur einbindenden Wand (bzw. was hiermit gleichbedeutend sein soll, bis zur auf der einbindenden Wand vorliegenden Putzschicht) erstreckt, z.B. aufgrund von Unebenheiten der einbindenden Wand oder des Putzes oder der Wärmedämmung Lücken aufweist. Um hier keine Wärmebrücken zu ermöglichen, kann man ein Wärmedämmmaterial, beispielsweise einen Polyurethanschaum, in die Lücken einfüllen, z.B. mittels Einspritzens. Alternativ kann auch ein sogenanntes Kompriband, auch als Anschlag- bzw. Fugenband bekannt, in die Lücke eingefügt werden. Hierbei handelt es sich um ein vorkomprimiertes, imprägniertes Schaumstoffdichtungsband, z.B. auf Polyurethanbasis, das nach dem Einbringen in eine Fuge oder Lücke langsam expandiert und sich dicht an die Fugen- bzw. Lückenränder anlegt. Alle diese kombinierten Dämmmaterialien können noch stets unter erste Wärmedämmung im Sinne der Erfindung subsumiert werden.

Im Sinne der vorliegenden Erfindung soll der Eckbereich aus erster Wärmedämmung und einbindendem Bauteil derart verstanden werden, dass die erste Wärmedämmung an der zweiten Seite der Wand, insbesondere Außenwand, bis an das einbindende Bauteil, beispielsweise die einbindende Wand, bzw. die darauf angebrachte Putzschicht heranreicht und eine Ecke mit dem einbindenden Bauteil ausbildet.

Das einbindende Bauteil zeigt aufgrund seiner Verbindung mit der kälteren Wand (ersten Wand), insbesondere Außenwand eines Gebäudes, in der Regel an der Stelle, an der kein Kontakt mit dem auf der zweiten Seite der Wand aufgebrachten Wärmedämmmaterial mehr vorliegt, eine Temperatursenke. Der Wärmeleiter im Sinne der vorliegenden Erfindung ist vorzugsweise derart ausgestaltet und angebracht, dass Wärmeenergie aufgrund eines Temperaturgefälles in den Eckbereich, insbesondere zu der bzw. in Richtung der Temperatursenke geleitet wird.

Aufgrund der Wärmedämmung liegt im Inneren des wärmegedämmten Bereichs bzw. im Inneren eines derart wärmegedämmten Raums regelmäßig eine höhere Temperatur vor. Diese Temperaturdifferenz nutzt der Wärmeleiter, um den Eckbereich, insbesondere den den Eckbereich bildenden Abschnitt des einbindenden Bauteils aufzuwärmen und um so die Temperaturdifferenz in diesem Eckbereich zur Innenraumtemperatur zu verringern.

Gemäß dem erfindungsgemäßen Verfahren liegt der Wärmeleiter, insbesondere ausschließlich, über eine Erstreckung beginnend an dem bzw. benachbart zum einbindenden Bauteil, entlang der ersten Wärmedämmung, vorzugsweise im Bereich der, benachbart zur oder an der ersten Wärmedämmung angebracht vor. In einer bevorzugteren Variante liegt der Wärmeleiter, insbesondere ausschließlich, über eine Erstreckung, insbesondere beginnend an dem bzw. benachbart zur ersten Wärmedämmung, entlang der einbindenden Wand, vorzugsweise im Bereich der, benachbart zur oder an der einbindenden Wand, angebracht vor. Bei letztgenannter Variante ist es von besonderem Vorteil, zumindest abschnittsweise eine zweite Wärmedämmung zwischen Wärmeleiter und einbindender Wand vorzusehen. Auf diese Weise kann ein unnötig hoher Energieabfluss aus dem wärmegedämmten Bereich über das einbindende Bauteil zu der ersten Wand verhindert werden. Es hat sich gezeigt, dass es vielfach bereits ausreicht, den Wärmeleiter sich im Bereich des einbindenden Bauteils erstrecken zu lassen, ohne dass gleichzeitig eine Erstreckung entlang der ersten Wärmedämmung vorzuliegen hat. Vielmehr reicht es auch aus, diese Ausgestaltung eines Wärmeleiters bis im Wesentlichen an das einbindende Bauteil heranzuführen. Im Sinne der vorliegenden Erfindung liegt der Wärmeleiter damit ebenfalls noch stets im Eckbereich von erster Wärmedämmung und einbindendem Bauteil vor. Auch bei dieser Variante können Wärmeleiter und zweite Wärmedämmung miteinander verbunden, beispielsweise miteinander verklebt sein. Hierbei ist es von besonderem Vorteil, sowohl die zweite Wärmedämmung als auch den Wärmeleiter unmittelbar an die erste Wärmedämmung oder an eine auf dieser ersten Wärmedämmung angebrachten Putzschicht anstoßen zu lassen. Die zweite Wärmedämmung bzw. Materialbahn kann auf dem einbindenden Bauteil oder auf einer hierauf angebrachten Putzschicht aufliegen oder zumindest teilweise in das einbindende Bauteil und/oder die darauf vorliegende Putzschicht eingelassen sein. Auf diese Weise gelingt es besonders gut, dass die mit der Erfindung einhergehenden Maßnahmen nicht merklich in Erscheinung treten und insbesondere den nutzbaren Raum nicht verringern. Unter der Erstreckung des Wärmeleiters im Sinne der Erfindung soll insbesondere die Ausdehnung, vorzugsweise des flächigen Abschnitts, des Wärmeleiters entlang der ersten Wärmedämmung bzw. entlang des einbindenden Bauteils verstanden werden.

Der Wärmeleiter, insbesondere der flächige Abschnitt des Wärmeleiters, verfügt vorzugsweise über eine durchschnittliche Dicke im Bereich von 0,2 bis 5 mm, insbesondere von 0,3 bis 1 mm.

Ferner sind auch solche Ausgestaltungen des erfindungsgemäßen Verfahrens besonders geeignet, bei denen der Wärmeleiter über mindestens einen ersten, insbesondere flächigen, Abschnitt und mindestens einen zweiten, insbesondere flächigen, Abschnitt verfügt, der mit dem ersten Abschnitt wärmeleitend verbunden ist, wobei der erste Abschnitt sich mindestens bereichsweise entlang der ersten Wärmedämmung erstreckt, wobei man diesen ersten Abschnitt insbesondere im Bereich der, benachbart zur oder an der ersten Wärmedämmung anbringt, wobei der zweite Abschnitt sich mindestens bereichsweise entlang dem einbindenden Bauteil erstreckt und wobei man diesen zweiten Abschnitt insbesondere im Bereich des, benachbart zum oder an dem einbindenden Bauteil anbringt.

Die ersten und/oder zweiten Abschnitte des Wärmeleiters sind vorzugsweise aus plattenförmigem Material gefertigt, vorzugsweise aus Metall. Es ist besonders bevorzugt, dass der Wärmeleiter, umfassend das Eckwinkelprofil, sich über im Wesentlichen die gesamte Höhe bzw. Länge der aus Wand, insbesondere Außenwand, und einbindendem Bauteil, beispielsweise einbindender Wand, gebildeten Raumecken erstreckt. In gleicher Weise ist bevorzugt, dass der Wärmeleiter sich über im Wesentlichen die gesamte Länge der aus Wand, insbesondere Außenwand, und einbindender Decke bzw. einbindendem Boden gebildeten Raumecken erstreckt. Mit der Länge der Erstreckung ist somit an dieser Stelle die Erstreckung des Wärmeleiters entlang der Längs- bzw. Höhenausdehnung des Eckbereichs gemeint.

Hierbei kann der erste Abschnitt des Wärmeleiters, welcher sich im Bereich der, benachbart zu oder an der ersten Wärmedämmung vorliegt, länger oder kürzer als der zweite Abschnitt des Wärmeleiters sein oder über die gleiche Länge wie der zweite Abschnitt verfügen. Mit Länge des ersten Abschnitts im Sinne der Erfindung soll die Erstreckung bzw. Ausdehnung entlang der ersten Wärmedämmung beginnend mit dem Schnittpunkt von erstem und zweitem Abschnitt verstanden werden. Entsprechend soll mit der Länge des zweiten Abschnitts die Erstreckung bzw. Ausdehnung entlang des einbindenden Bauteils beginnend mit dem Schnittpunkt von erstem und zweitem Abschnitt verstanden werden.

Der den ersten und zweiten Abschnitt umfassende Wärmeleiter verfügt zweckmäßiger Weise in Bezug auf diese ersten und zweiten Abschnitte jeweils über eine der ersten Wärmedämmung bzw. dem einbindenden Bauteil zugewandte bzw. zuwendbare Seite und jeweils über eine der ersten Wärmedämmung bzw. dem einbindenden Bauteil abgewandten bzw. abwendbaren Seite.

Mit der erfindungsgemäßen Anbringung des Wärmeleiters im Eckbereich von erster Wärmedämmung und einbindendem Bauteil wird die Kondensation von Luftfeuchtigkeit in den gefährdeten Raumeckenarealen zurückgedrängt bzw. verhindert. Der Wärmeleiter nimmt Wärmeenergie aus dem Innenraum auf und transportiert diese auf Grund des Temperaturgradienten in den kälteren Eckbereich von erster Wärmedämmung und einbindendem Bauteil. Auf dieser Weise wird die Temperatur im Eckbereich bzw. an der Oberfläche des einbindenden Bauteils im kritischen Eckbereich erwärmt, wodurch Kondensatbildung vermieden wird und Schimmelschäden nicht mehr auftreten. Denn in der Regel wird Schimmelbildung in Eckbereichen von innen wärmegedämmten Räumen nicht mehr beobachtet, wenn die Temperaturdifferenz zwischen der Innenraumtemperatur und der Temperatur im Eckbereich nicht mehr als 2 bis 4°C, vorzugsweise 2 bis 3°C beträgt. Mit der vorliegenden Erfindung gelingt auf besonders anwendungsfreundliche und kostengünstige Weise, die Temperatur im hier kritischen Eckbereich auf einen Wert anzuheben, der Feuchte und/oder Schimmelbildung unter üblichen Nutzungsbedingungen nicht mehr zulässt.

Der Wärmeleiter enthält vorzugsweise Metall, insbesondere Aluminium oder Stahl, und/oder Putz, enthaltend Metallfasern, -pulver, -flitter, und/oder -kugeln, geschäumtes Polymermaterial, enthaltend Metallfasern, -pulver, -flitter, und/oder -kugeln, und/oder Erze oder ist zumindest in Teilen, vorzugsweise im Wesentlichen vollständig hieraus gebildet bzw. besteht in Teilen oder vollständig aus Metall.

In einer besonders geeigneten Ausführungsform des erfindungsgemäßen Verfahrens liegt der zweite Abschnitt des Wärmeleiters in Kontakt mit einer auf dem einbindenden Bauteil vorliegenden und/oder in dieses einbindende Bauteil eingelassenen zweiten Wärmedämmung, insbesondere einer Materialbahn, vor, die über einen höheren Wärmedurchlasswiderstand verfügt als das einbindende Bauteil. Dabei kann vorzugsweise vorgesehen sein, dass die zweite Wärmedämmung, insbesondere die Materialbahn, einen Wärmedurchlasswiderstand von mindestens 0,30, insbesondere mindestens 0,32 und besonders bevorzugt von mindestens 0,35 K m² / W, und/oder eine Wärmeleitfähigkeit von maximal 40 mW/(m K), vorzugsweise von maximal 35 mW/(m K), aufweist. Für diese zweite Wärmedämmung, insbesondere Materialbahn, greift man bevorzugt zurück auf geschäumte oder expandierte Kunststoffmaterialen wie geschäumtes Polystyrol, insbesondere expandiertes Polystyrol, vorzugsweise enthaltend Graphit und/oder Ruß, geschäumtes Polyurethan, insbesondere Vlies- oder Aluminium-kaschiertes Polyurethan, und/oder Mineralwolle, insbesondere Mineralwolle enthaltend Aerogel. Für die zweite Wärmedämmung, insbesondere die Materialbahn, kommen in einer besonders geeigneten Ausgestaltung geschäumtes Kunststoffmaterial, insbesondere geschäumtes Polyurethan und/oder geschäumte Styrol(co)polymere, beispielsweise geschäumtes oder expandiertes Polystyrol, in Betracht. Die zweite Wärmedämmung bzw. die Materialbahn weist insbesondere eine durchschnittliche Dicke im Bereich von 1 bis 40 mm, vorzugsweise von 5 bis 25 mm, auf. In einer zweckmäßigen Ausgestaltung liegt die durchschnittliche Dicke der zweiten Wärmedämmung bzw. Materialbahn im Bereich von 8 bis 12 mm.

Die Verwendung der genannten zweiten Wärmedämmung, insbesondere Materialbahn, bewirkt, dass nicht zu viel Energie in das einbindende Bauteil abfließt, was gegebenenfalls die Wärmedämmwirkung in einem unnötigen Umfang beinträchtigen würde. In Kombination mit der zweiten Wärmedämmung trägt der Wärmeleiter auf der einbindenden Wand bedeutend zur Erwärmung des Eckbereichs bei. Aufgrund des minimierten Energieabflusses in die einbindende Wand kann sich ein höherer Temperaturgradient einstellen. Hierdurch kann wiederum mehr Energie in den Eckbereich abfließen.

Der Wärmeleiter umfasst oder stellt dar ein Eckwinkelprofil mit einem ersten Schenkel als dem ersten Abschnitt oder als Bestandteil hiervon und einem zweiten Schenkel als dem zweiten Abschnitt oder als Bestandteil hiervon. In einer zweckmäßigen Variante ist an dem zweiten Schenkel eine Wärmedämmung, geeigneter Weise dem einbindenden Bauteil zugewandt bzw. zuwendbar, wie vorangehend für die zweite Wärmedämmung beschrieben, vorgesehen bzw. angebracht. Allerdings stellt sich der mit der Erfindung angestrebte Erfolg auch ein ohne eine solche Wärmedämmung zwischen Wärmeleiter bzw. Eckwinkelprofil und einbindendem Bauteil. Demgemäß kann ein Eckwinkelprofil auch unmittelbar auf ein einbindendes Bauteil bzw. eine diese mit bildende Platte, beispielsweise Gipskartonplatte, bzw. eine auf dem einbindenden Bauteil vorliegende Putzschicht angebracht sein bzw. hieran anliegen. Selbstverständlich kann hierbei auch ein solches einbindendes Bauteil zum Einsatz kommen, das unterhalb seiner Oberfläche mit einer Innendämmung versehen ist.

In einer zweckmäßigen Ausgestaltung ist vorgesehen, dass der erste Schenkel des Eckwinkelprofils eine Länge im Bereich von 1 bis 25 cm, insbesondere von 3 bis 20 cm, aufweist und dass der zweite Schenkel des Eckwinkelprofils eine Länge im Bereich von 3 bis 25 cm, insbesondere von 5 bis 20 cm, aufweist. Dabei sind unter anderem auch solche Eckwinkelprofile besonders geeignet, bei denen der erste und/oder zweite Schenkel einen durchschnittliche Dicke im Bereich von 0,2 bis 5 mm, insbesondere von 0,3 bis 1 mm aufweist. Mit Länge des ersten Schenkels im Sinne der Erfindung soll die Erstreckung bzw. Ausdehnung entlang der ersten Wärmedämmung beginnend mit dem Schnittpunkt von erstem und zweitem Schenkel verstanden werden. Entsprechend soll mit der Länge des zweiten Schenkels die Erstreckung bzw. Ausdehnung entlang des einbindenden Bauteils beginnend mit dem Schnittpunkt von erstem und zweitem Schenkel verstanden werden.

Für das erfindungsgemäße Verfahren wird bevorzugt auf Wärmeleiter, umfassend Eckwinkelprofile, aus Metall, insbesondere Aluminium oder Stahl, zurückgegriffen. In einer weiteren zweckmäßigen Ausgestaltung des erfindungsgemäßen Verfahrens ist vorgesehen, dass der Wärmeleiter, umfassend das Eckwinkelprofil, ein unperforiertes Metallblech oder eine unperforierte Metallfolie, ein Lochblech, Metallnetz, Metallgewebe und/oder Metallvlies darstellt oder zumindest in Teilen hieraus gebildet ist.

Für die erste Wärmedämmung der zweiten Seite der Wand, insbesondere der Innenseite einer Gebäudeaußenwand, sowie für die zweite Wärmedämmung können grundsätzlich vielfältigste Materialien eingesetzt werden. Beispielsweise umfassen die erste und/oder zweite Wärmedämmung geschäumte oder expandierte Kunststoffe, insbesondere geschäumte, expandierte und extrudierte Styrol(co)polymere, beispielsweise geschäumte oder expandierte Polystyrole, Polyethylene, Polypropylene, geschäumte kaschierte und unkaschierte Polyurethane, Polyisocyanurate und Phenolharze; Mineralwolle oder -fasern, insbesondere Glaswolle und Steinwolle; Mineralschäume, insbesondere Porenbeton, Blähperlit, expandierter Vermiculit, Schaumglas bzw. Schaumglasplatten sowie Blähtonleichtzuschlag; leichtes Calciumsilikat, inbesondere Calciumsilikatplatten; Vakuumisolationspaneele; Aerogele, insbesondere Aerogele in Mineralwolle als Trägermaterial, Vlies als Trägermaterial sowie als Granulat gebunden in Plattenform; gefällte oder pyrogene Kieselsäure; Mikrohohlfasern, insbesondere Watte oder Vliese; Dämmstoffe auf Cellulose- oder Polymilchsäurebasis, insbesondere Cellulosefasern; Korkplatten oder Korke, insbesondere expandierten Kork; Schafwolle; sowie pflanzliche Faserprodukte, insbesondere Dämmstoffe auf Hanf- Stroh- Schilf-, Holzweichfaser- oder Holzwollebasis.

Geeignete Wärmedämmmaterialen insbesondere für die erste Wärmedämmung umfassen bzw. sind gebildet aus geschäumten oder expandierten Kunststoffmaterialien, insbesondere geschäumtem Polyurethan und/oder geschäumten oder expandierten Styrol(co)polymeren, Mineralwolle oder -fasern, Zellulosefasern, Schaumglasplatten, Kalzium-Silikatplatten, Mineralschäume, Blähperlitplatten, Korkplatten, Schafwolle und/oder Holzweichfaserplatten oder sind zumindest in Teilen.

Das erfindungsgemäße Verfahren sieht vor, dass man den ersten Abschnitt des Wärmeleiters mit der ersten Wärmedämmung, mittelbar oder unmittelbar, verbindet, insbesondere verklebt, und/oder dass man den zweiten Abschnitt des Wärmeleiters mit dem einbindenden Bauteil, mittelbar oder unmittelbar, verbindet, insbesondere verklebt.

Der Wärmeleiter verfügt vorzugsweise über eine Wärmetransportfähigkeit (Produkt aus durchschnittlicher Materialdicke und Wärmeleitfähigkeit) von mindestens 20 mW/K, insbesondere mindestens 25 mW/Kund vorzugsweise mindestens 50 mW/K.

Das erfindungsgemäße Verfahren wird in der Regel durch eine Putzschicht auf dem Wärmeleiter nicht beeinträchtigt.

In einer besonders zweckmäßigen Ausgestaltung des erfindungsgemäßen Verfahrens ist vorgesehen, dass sich der Wärmeleiter, umfassend das Eckwinkelprofil, im Wesentlichen über die gesamte Länge bzw. Höhe der ersten Wärmedämmung im Eckbereich von erster Wärmedämmung und einbindendem Bauteil erstreckt.

Der Wärmeleiter stellt ein Eckwinkelprofil dar oder umfasst ein solches.

Ein Eckwinkelprofil mit einem ersten und einem zweiten Schenkel, die jeweils über einen Schenkelrand verfügen, kann enthalten oder aus einem Material gebildet sein, welches über eine höhere Wärmeleitfähigkeit verfügt als ein Wärmedämmmaterial, insbesondere Wärmedämmmaterial für Innenräume, wobei der zweite Schenkel auf seiner Befestigungsseite mindestens eine Wärmedämmung in Form einer Materialbahn aufweist mit einem Wärmedurchlasswiderstand von mindestens 0,30, insbesondere mindestens 0,32 und besonders bevorzugt von mindestens 0,35 K m² / W, und/oder mit einer Wärmeleitfähigkeit von maximal 40 mW/(m K), vorzugsweise von maximal 35 mW/(m K). Der Schenkelrand eines Schenkels des Eckwinkelprofils ist im Sinne der Erfindung derjenige Abschluss des Schenkels, der beabstandet ist von dem Schnitt- bzw. Treffpunkt von erstem und zweitem Schenkel. Die Schenkelränder von erstem und zweitem Schenkel sind demgemäß voneinander beabstandet und nicht unmittelbar miteinander in Kontakt. Die Befestigungsseite eines Schenkels ist im Sinne der Erfindung diejenige Seite, über die eine Ver- bzw. Anbindung an die Unterlage, beispielsweise an das einbindende Bauteil bzw. an die hierauf angebrachte Putzschicht oder an die erste Wärmedämmung bzw. die darauf angebrachte Putzschicht direkt oder indirekt, beispielsweise unter Zwischenschaltung einer zweiten Wärmedämmung bzw. einer wärmedämmenden Materialbahn, hergestellt wird. Die dieser Befestigungsseite gegenüberliegende Seite des Schenkels ist dann diejenige Seite, welche dem Raum zugewandt ist. Die Befestigungsseite des zweiten Schenkels wird in der Regel zur Anbindung an das einbindende Bauteil und die Befestigungsseite des ersten Schenkels zur Anbindung an die erste Wärmedämmung genutzt.

Geeignete Eckwinkelprofile zeichnen sich insbesondere auch dadurch aus, dass diese ein unperforiertes oder perforiertes Metallblech, beispielsweise ein Lochblech, ein Metallnetz, Metallgewebe und/oder Metallvlies darstellen oder zumindest in Teilen hieraus gebildet sind, insbesondere enthaltend oder im Wesentlichen gebildet aus Aluminium oder Stahl.

Die mit den Eckwinkelprofilen verwendeten Materialbahnen können im Wesentlichen gebildet sein oder umfassen geschäumte oder expandierte Kunststoffe, insbesondere geschäumte, expandierte und extrudierte Styrol(co)polymere, beispielsweise geschäumte oder expandierte Polystyrole, Polyethylene, Polypropylene, geschäumte kaschierte und unkaschierte Polyurethane, Polyisocyanurate und Phenolharze; Mineralwolle oder -fasern, insbesondere Glaswolle und Steinwolle; Mineralschäume, insbesondere Porenbeton, Blähperlit, expandierter Vermiculit, Schaumglas bzw. Schaumglasplatten sowie Blähtonleichtzuschlag; leichtes Calciumsilikat, inbesondere Calciumsilikatplatten; Vakuumisolationspaneele; Aerogele, insbesondere Aerogele in Mineralwolle als Trägermaterial, Vlies als Trägermaterial sowie als Granulat gebunden in Plattenform; gefällte oder pyrogene Kieselsäure; Mikrohohlfasern, insbesondere Watte oder Vliese; Dämmstoffe auf Cellulose- oder Polymilchsäurebasis, insbesondere Cellulosefasern; Korkplatten oder Korke, insbesondere expandierten Kork; Schafwolle; sowie pflanzliche Faserprodukte, insbesondere Dämmstoffe auf Hanf- Stroh- Schilf-, Holzweichfaser- oder Holzwollebasis. Hierbei sind solche Eckwinkelprofile besonders bevorzugt, bei denen die Materialbahn geschäumtes Polystyrol, insbesondere expandiertes Polystyrol, enthaltend Graphit und/oder Ruß, geschäumtes Polyurethan, insbesondere Vlies- oder Aluminium-kaschiertes Polyurethan, und/oder Mineralwolle, insbesondere Mineralwolle enthaltend Aerogel, umfasst oder hieraus gebildet ist.

Die Eckwinkelprofile umfassen in einer besonders zweckmäßigen Ausgestaltung ferner mindestens eine erste flexible Lage, die sich, vorzugsweise im Wesentlichen in der Ebene, in der der erste Schenkel liegt, über den Schenkelrand des ersten Schenkels hinaus erstreckt und/oder mindestens eine zweite flexible Lage, die sich, vorzugsweise im Wesentlichen in der Ebene, in der der zweite Schenkel liegt, über den Schenkelrand des zweiten Schenkels hinaus erstreckt. Auf diese Weise können Risse im Übergang von Eckwinkelprofil zum anliegenden Putz, beispielsweise bedingt durch Materialspannungen beim Trocknungsvorgang oder durch Temperaturschwankungen, wirksam vermieden, jedenfalls zurückgedrängt werden.

Hierbei umfassen die erste und/oder zweite flexible Lage bevorzugt eine Gewebebahn oder stellen ein solche dar. Die erste und/oder zweite flexible Lage sind besonders zweckmäßig zugleich auch an dem ersten bzw. zweiten Schenkel angebracht, und zwar insbesondere jeweils auf der der Befestigungsseite gegenüberliegenden Seite.

Der Wärmeleiter der erfindungsgemäßen Gebäude oder Gebäudebestandteile verfügt dabei, insbesondere ausschließlich, über eine Erstreckung beginnend an dem bzw. benachbart zum einbindenden Bauteil entlang der ersten Wärmedämmung, vorzugsweise angebracht im Bereich der, benachbart zur oder an der ersten Wärmedämmung, und , insbesondere ausschließlich, über eine Erstreckung beginnend an dem bzw. benachbart zur ersten Wärmedämmung entlang der einbindenden Wand, vorzugsweise angebracht im Bereich der, benachbart zur oder an der einbindenden Wand, verfügt. Die letztgenannte Variante ist gegenüber der erstgenannten Variante bevorzugt, insbesondere auch dann, wenn zwischen Wärmeleiter und einbindender Wand die zweite Wärmedämmung, insbesondere in Form einer Materialbahn vorliegt.

Solche Gebäude oder Gebäudebestandteile haben sich als besonders zweckmäßig erwiesen, bei denen der Wärmeleiter über mindestens einen ersten, insbesondere flächigen, Abschnitt und mindestens einen zweiten, insbesondere flächigen, Abschnitt verfügt, der mit dem ersten Abschnitt wärmeleitend verbunden ist, und bei denen der erste Abschnitt sich mindestens bereichsweise entlang der ersten Wärmedämmung erstreckt, wobei dieser erste Abschnitt insbesondere im Bereich der, benachbart zur oder an der ersten Wärmedämmung angebracht ist, und wobei der zweite Abschnitt sich mindestens bereichsweise entlang dem einbindenden Bauteil erstreckt, wobei dieser zweite Abschnitt insbesondere im Bereich des, benachbart zum oder an dem einbindenden Bauteil angebracht ist.

Bei den erfindungsgemäßen Gebäuden oder Gebäudebestandteilen umfasst der Wärmeleiter vorzugsweise Metall, insbesondere Aluminium oder Stahl, und/oder Putz, enthaltend Metallfasern, -pulver, -flitter und/oder -kugeln, geschäumtes Polymermaterial, enthaltend Metallfasern, -pulver, -flitter und/oder -kugeln, und/oder Erze oder ist zumindest in Teilen im Wesentlichen aus Metall, insbesondere Aluminium oder Stahl, und/oder Putz, enthaltend Metallfasern, -pulver, -flitter und/oder -kugeln, geschäumten Polymermaterial, enthaltend Metallfasern, -pulver, -flitter und/oder -kugeln, und/oder Erzen gebildet.

In einer vorteilhaften Ausführungsform ist vorgesehen, dass der Wärmeleiter, insbesondere der zweite Abschnitt des Wärmeleiters, in Kontakt mit einer auf dem einbindenden Bauteil vorliegenden und/oder in das einbindende Bauteil eingelassenen zweiten Wärmedämmung, insbesondere wärmedämmenden Materialbahn, steht, die über einen höheren Wärmedurchlasswiderstand verfügt als das einbindende Bauteil.

Bei den erfindungsgemäßen Gebäuden oder Gebäudebestandteilen umfasst die zweite Wärmedämmung, insbesondere die Materialbahn, vorzugsweise geschäumtes Polystyrol, insbesondere expandiertes Polystyrol, vorzugsweise enthaltend Graphit und/oder Ruß, geschäumtes Polyurethan, insbesondere Vlies- oder Aluminium-kaschiertes Polyurethan, und/oder Mineralwolle, insbesondere Mineralwolle enthaltend Aerogel, oder ist hieraus gebildet. Vorzugsweise weist diese zweite Wärmedämmung hierbei eine durchschnittliche Dicke im Bereich von 1 bis 40 mm, vorzugsweise von 5 bis 25 mm, auf.

Bei den erfindungsgemäßen Gebäuden oder Gebäudebestandteilen umfasst der Wärmeleiter oder stellt dar ein Eckwinkelprofil mit einem ersten Schenkel als dem ersten Abschnitt oder als Bestandteil hiervon und einem zweiten Schenkel als dem zweiten Abschnitt oder als Bestandteil hiervon. Diese Eckwinkelprofile umfassen insbesondere Metall, vorzugsweise Aluminium oder Stahl, oder sind hieraus gebildet.

Solche Eckwinkelprofile haben sich als besonders zweckmäßig erwiesen, bei denen der erste Schenkel des Eckwinkelprofils eine Länge bzw. Erstreckung im Bereich von 1 bis 25 cm, insbesondere von 3 bis 20 cm, aufweist und bei denen der zweite Schenkel des Eckwinkelprofils eine Länge bzw. Erstreckung im Bereich von 3 bis 25 cm, insbesondere von 5 bis 20 cm, aufweist. Die Länge eines Schenkels soll die Ausdehnung bzw. Erstreckung weg vom Treff- bzw. Schnittpunkt von erstem und zweitem Schenkel angeben. Hiervon zu unterscheiden ist die Höhe bzw. Länge des Eckwinkelprofils selber. Diese korrespondiert vorzugsweise mit der Raumhöhe oder -länge bzw. mit der Höhe oder Länge der Wärmedämmung bzw. des einbindenden Bauteils. Ferner ist hierbei bevorzugt, wenn der erste und/oder zweite Schenkel des Eckwinkelprofils eine durchschnittliche Dicke im Bereich von 0,2 bis 5 mm, insbesondere von 0,3 bis 1 mm, aufweist.

Für die erste und/oder zweite Wärmedämmung der erfindungsgemäßen Gebäude oder Gebäudebestandteile kommen bevorzugt geschäumte oder expandierte Kunststoffmaterialien, insbesondere geschäumtes Polyurethan und/oder geschäumte oder expandierte Styrol(co)polymere, Mineralwolle oder -fasern, Zellulosefasern, Schaumglasplatten, Kalzium-Silikatplatten, Korkplatten, Schafwolle und/oder Holzweichfaserplatten zum Einsatz.

Grundsätzlich kommen für die erste und/oder zweite Wärmedämmung in Betracht geschäumte oder expandierte Kunststoffe, insbesondere geschäumte, expandierte und extrudierte Styrol(co)polymere, beispielsweise geschäumte oder expandierte Polystyrole, Polyethylene, Polypropylene, geschäumte kaschierte und unkaschierte Polyurethane, Polyisocyanurate und Phenolharze; Mineralwolle oder -fasern, insbesondere Glaswolle und Steinwolle; Mineralschäume, insbesondere Porenbeton, Blähperlit, expandierter Vermiculit, Schaumglas bzw. Schaumglasplatten sowie Blähtonleichtzuschlag; leichtes Calciumsilikat, inbesondere Calciumsilikatplatten; Vakuumisolationspaneele; Aerogele, insbesondere Aerogele in Mineralwolle als Trägermaterial, Vlies als Trägermaterial sowie als Granulat gebunden in Plattenform; gefällte oder pyrogene Kieselsäure; Mikrohohlfasern, insbesondere Watte oder Vliese; Dämmstoffe auf Cellulose- oder Polymilchsäurebasis, insbesondere Cellulosefasern; Korkplatten oder Korke, insbesondere expandierten Kork; Schafwolle; sowie pflanzliche Faserprodukte, insbesondere Dämmstoffe auf Hanf- Stroh- Schilf-, Holzweichfaser- oder Holzwollebasis. Hierbei sind solche Eckwinkelprofile besonders bevorzugt, bei denen die Materialbahn geschäumtes Polystyrol, insbesondere expandiertes Polystyrol, enthaltend Graphit und/oder Ruß, geschäumtes Polyurethan, insbesondere Vlies- oder Aluminium-kaschiertes Polyurethan, und/oder Mineralwolle, insbesondere Mineralwolle enthaltend Aerogel.

Das Eckwinkelprofil kann zum Beispiel ein unperforiertes Metallblech oder eine unperforierte Metallfolie, ein perforiertes Metallblech, beispielsweise ein Lochblech, ein Metallnetz, Metallgewebe und/oder Metallvlies umfassen oder hieraus gebildet sein.

Bei den erfindungsgemäßen Gebäuden oder Gebäudebestandteilen ist der erste Abschnitt des Wärmeleiters mit der ersten Wärmedämmung, mittelbar oder unmittelbar, verbunden, insbesondere verklebt; zusätzlich ist der zweite Abschnitt des Wärmeleiters mit dem einbindenden Bauteil, mittelbar oder unmittelbar, verbunden, insbesondere verklebt.

Der Wärmeleiter verfügt hierbei geeigneter Weise über eine Wärmetransportfähigkeit (Produkt aus durchschnittlicher Materialdicke und Wärmeleitfähigkeit) von mindestens 20 mW/K, insbesondere mindestens 25 mW/Kund vorzugsweise mindestens 50 mW/K.

Selbstverständlich kann bei den erfindungsgemäßen Gebäuden oder Gebäudebestandteilen auf dem Wärmeleiter mindestens eine Putzschicht vorliegen oder der Wärmeleiter kann in mindestens eine Putzschicht eingebracht sein.

Außerdem kann in einer zweckmäßigen Variante das einbindende Bauteil des erfindungsgemäßen Gebäudes oder Gebäudebestandteils Bestandteil eines Badezimmers oder Nassraums sein. Demgemäß kann ein Badezimmer oder ein Nassraum auch ein erfindungsgemäßer Gebäudebestandteil sein oder letzterer ein Badezimmer oder einen Nassraum umfassen.

Der Wärmeleiter stellt hierbei vorzugsweise ein Stahlblech, insbesondere verzinktes Stahlblech, ein Aluminiumblech oder ein Kupferblech oder ein durchbrochenes Stahlblech, insbesondere verzinktes Stahlblech, Aluminiumblech oder Kupferblech dar.

Mit der vorliegenden Erfindung geht die überraschende Erkenntnisse einher, dass sich Feuchte- und Schimmelbildung bzw. -schäden im Bereich von Raumecken, welche durch ein einbindendes Bauteil und eine innenseitig wärmegedämmte Wand gebildet werden, signifikant reduzieren oder sogar vollständig unterbinden lassen, wenn ein Wärmeleiter erfindungsgemäß im Eckbereich von innenseitiger Wärmedämmung und einbindendem Bauteil angebracht wird. Diese Maßnahme lässt sich einfach umsetzen, ist folglich wenig kostenintensiv und führt insbesondere, anders als die aus dem Stand der Technik bekannten Maßnahmen, nicht zu einer optischen Beeinträchtigung von Innenräumen und auch nicht zu einer unerwünschten Reduzierung des Wohnraums. Vielmehr lassen sich beispielsweise die Eckwinkelprofile nahezu oder vollständig unsichtbar anbringen, beispielsweise unter oder in einem Putz. Mit der vorliegenden Erfindung kann die Temperatur der kältesten Stelle im Eckbereich, insbesondere an der Oberfläche des einbindenden Bauteils im Eckbereich, signifikant angehoben werden. Mit der vorliegenden Erfindung gelingt es auch, die kälteste Stelle an der Oberfläche des einbindenden Bauteils aus dem Eckbereich, d.h. aus dem Bereich des Übergangs von innenseitiger Wärmedämmung und einbindendem Bauteil herauszuführen in Richtung des Innenraums und gleichzeitig die Temperatur dieser kältesten Stelle zu erhöhen. Mit der Verschiebung dieser kältesten Stelle weg von dem Eckbereich gelingt eine schnellere Erwärmung derselben auch dadurch, dass je weiter man sich von diesem Eckbereich entfernt, eine ausgeprägtere Luftbewegung stattfindet. Diese Luftbewegung trägt zu einer Erwärmung bei und beugt damit ebenfalls der Gefahr der Schimmelbildung vor.

Mit der vorliegenden Erfindung gelingt es folglich, den Temperaturunterschied zwischen der Raumlufttemperatur und der Temperatur der kältesten Oberfläche Eckbereich bzw. im Bereich des im Eckbereich vorliegenden einbindenden Bauteils auf etwa 2 bis 4 Grad Celsius, vorzugsweise 2 bis 3°C zu verringern. Diese Temperaturdifferenz ermöglicht selbst bei schlechten Lüftungsverhältnissen in der Regel nicht mehr die Bildung von Schimmel.

Man kann davon ausgehen, dass sich in einem beheizten Raum häufig verschiedene Temperaturzonen bilden. In der Heizperiode ist z. B. ein Temperaturgradient typisch, der von unten nach oben etwas ansteigt. Zwischen der minimalen und der maximalen Raumlufttemperatur können Unterschiede von 1°C und mehr vorliegen. Der Stand der Technik ist insofern nachteilig, als zwischen den verschiedenen Temperaturzonen, die sich im beschriebenen Fall in ähnlicher Weise auf der Wand bzw. Ecke einstellen, nur eine Verbindung über einen Putz oder eine Beschichtung existiert. Dieses bringt unvermeidbar lokal deutlich unterscheidbare Oberflächentemperaturen entlang der vertikalen Achse des Eckbereichs zwischen Außen- und einbindender Wand mit sich. Mit der vorliegenden Erfindung gelingt es hingegen, derartige Temperaturunterschiede durch den schnellen vertikalen Energietransport weitgehend auszugleichen. Wenn sich bei einer Ausführung nach dem Stand der Technik z. B. eine niedrigste Temperatur von 18,1° C an einem Punkt im unteren Drittel des Eckbereichs ausbildet, in der Mitte und im oberen Teil aber 19,3°C vorliegen, so kann mit der vorliegenden Erfindung die niedrigste Temperatur im Eckbereich über die gesamte vertikale Ausdehnung zwischen diese beiden Temperaturwerte gebracht werden. Damit ist die niedrigste im Eckbereich zu findende Oberflächentemperatur deutlich erhöht gegenüber nach bekannten Maßnahmen erhaltenen Konstruktionen und ein noch höherer Schutz vor Schimmelbildung gegeben.

Mit der vorliegenden Erfindung geht ferner der Vorteil einher, dass über die gesamte Länge des Wärmeleiters sich ein schnellerer Temperaturausgleich, d.h. eine Anhebung der Temperatur des im Eckbereich vorliegenden einbindenden Bauteils einstellt.

Weitere Merkmale und Vorteile der Erfindung ergeben sich aus der nachgehenden Beschreibung, in der bevorzugte Ausführungsformen der Erfindung beispielhaft anhand schematischer Zeichnungen erläutert sind. Dabei zeigen:
- Figur 1: einen schematischen Querschnitt durch einen nicht erfindungsgemäßen wärmegedämmten ersten Innenraum,
- Figur 2: einen schematischen Querschnitt durch einen nicht erfindungsgemäßen wärmegedämmten zweiten Innenraum,
- Figur 3: einen schematischen Querschnitt durch einen erfindungsgemäßen wärmegedämmten ersten Innenraum,
- Figur 4: einen schematischen Querschnitt durch einen erfindungsgemäßen wärmegedämmten zweiten Innenraum,
- Figur 5: einen schematischen Querschnitt durch einen erfindungsgemäßen wärmegedämmten dritten Innenraum,
- Figur 6: einen schematischen Querschnitt durch ein Eckwinkelprofil und
- Figur 7: eine schematische Querschnittsansicht durch eine weitere Ausführungsform eines Eckwinkelprofils.

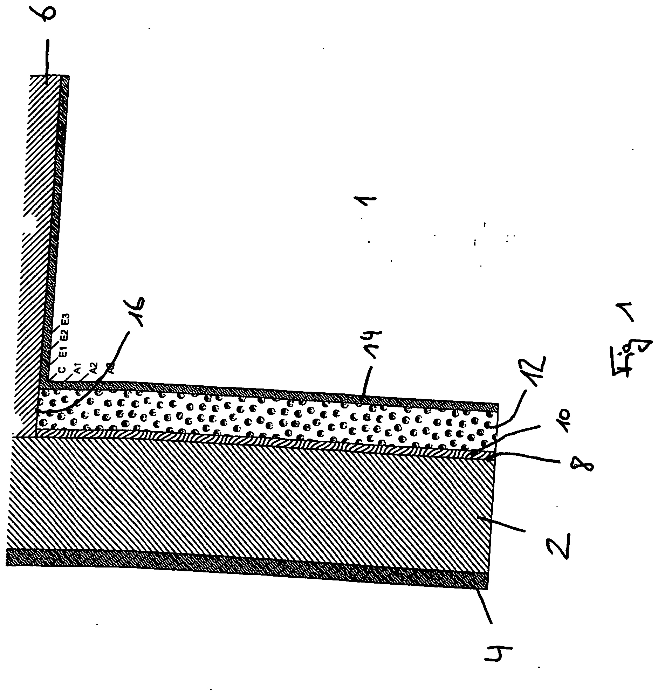

Figur 1 zeigt einen schematischen Querschnitt durch einen nach dem Stand der Technik wärmegedämmten Innenraum 1. Die Gebäudeaußenwand 2, beispielsweise aus Ziegelmauerwerk, ist mit einem Außenputz 4 versehen. Die einbindende Wand 6 steht in direkter Verbindung mit der Außenwand 2. An der Innenseite 8 der Außenwand 2 ist mit Hilfe eines Klebers 10 eine Wärmedämmung 12 angebracht. Hierbei kann es sich in einer bevorzugten Ausgestaltung um expandierten Polystyrolschaum (0,035 W/(m K)) handeln, beispielsweise mit einer Dicke von 80 mm. Auf der Wärmedämmung 12 und der einbindenden Wand 6 liegt ein Innenputz 14 vor. Mit den Abkürzungen A1, A2, A3, C, E1, E2 und E3 werden Temperaturmessstellen bezeichnet. Diese Messstellen sind voneinander jeweils 5 cm entfernt.

Die in Figur 1 gezeigte Ausführungsform enthält auf der einbindenden Wand 6, abgesehen von der an die einbindende Wand 6 anstoßenden Kopffläche 16 der Wärmedämmung 12 keine weitere Wärmedämmung.

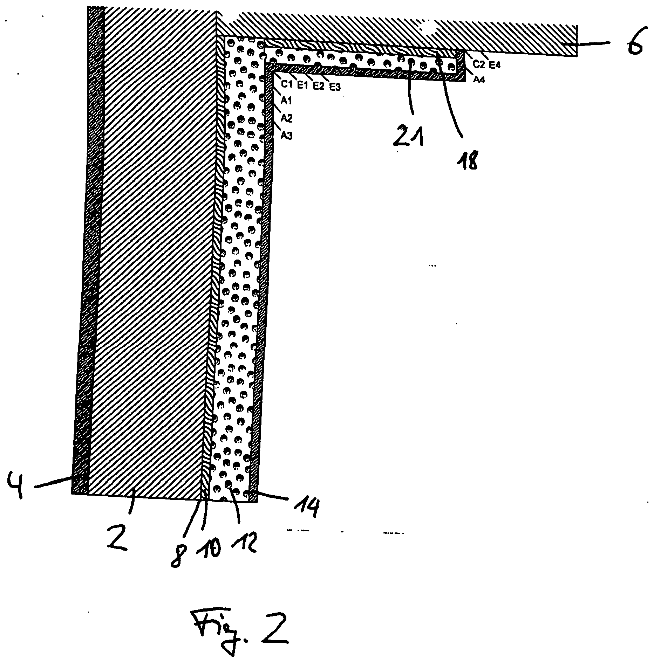

Die in Figur 2 wiedergegebene Ausgestaltung einer Innenraumwärmedämmung nach dem Stand der Technik unterscheidet sich von derjenigen gemäß Figur 1 dadurch, dass auf der einbindenden Wand 6 mit Hilfe eines Klebers 18 eine Innendämmplatte 21 angebracht worden ist. Diese streckt sich somit von der Wärmedämmung 12 in Richtung des Innenraumes entlang der einbindenden Wand 6. In der dargestellten Variante ist auch diese Innendämmplatte mit einer Putzschicht 14 versehen. Die Abkürzungen A4, C2 und E4 geben weitere Temperaturenmessstellen an und sind jeweils ebenfalls 5 cm voneinander entfernt. Die in Figur 2 wiedergegebene Innendämmplatte 21 wird häufig auch in Form eines sogenannten Dämmkeils ausgeführt, d.h. die Dicke verjüngt sich, je weiter die Dämmplatte sich in Richtung des Innenraums erstreckt. Hierdurch soll eine verbesserte Raumoptik erzielt werden (nicht abgebildet).

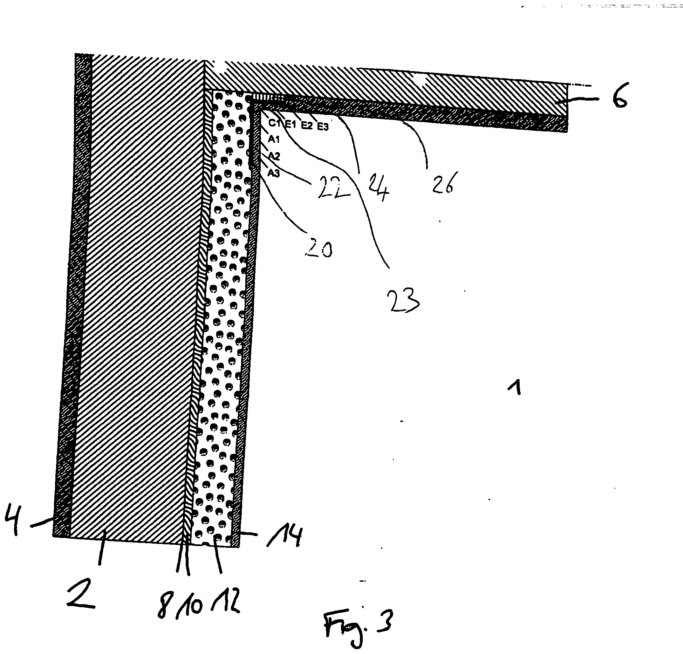

Figur 3 entnimmt man eine nach dem erfindungsgemäßen Verfahren erhaltene Innenraumwärmedämmung. Im Unterschied zu der in Figur 1 dargestellten Ausführungsvariante ist im Eckbereich 23 von erster Wärmedämmung 12 zu einbindender Wand 6 ein Wärmeleiter 20 in Form eines Eckwinkelprofils angebracht. Dieses Eckwinkelprofil 20 verfügt über einen ersten Abschnitt 22, der sich entlang der ersten Wärmedämmung 12 erstreckt und in der dargestellten Variante mit der Oberseite der ersten Wärmedämmung 12 verklebt ist. Ein mit dem ersten Abschnitt 22 wärmeleitend verbundener zweiter Abschnitt 24 des Wärmeleiters 20 liegt nicht unmittelbar an der einbindenden Wand 6 an, sondern ist von dieser durch einen Wärmedämmstreifen 26, beispielsweise aus Polyurethanschaum oder Mineralwolle, getrennt. Es hat sich als zweckmäßig erwiesen, den zweiten Schenkel 24 des Wärmeleiters 20 nicht unmittelbar mit der einbindenden Wand 6 in Anlage zu bringen, sondern einen Wärmedämmstreifen 26 vorzusehen. Auf diese Weise geht nicht zu viel der transportierten Wärmeenergie über die einbindende Wand wieder verloren.

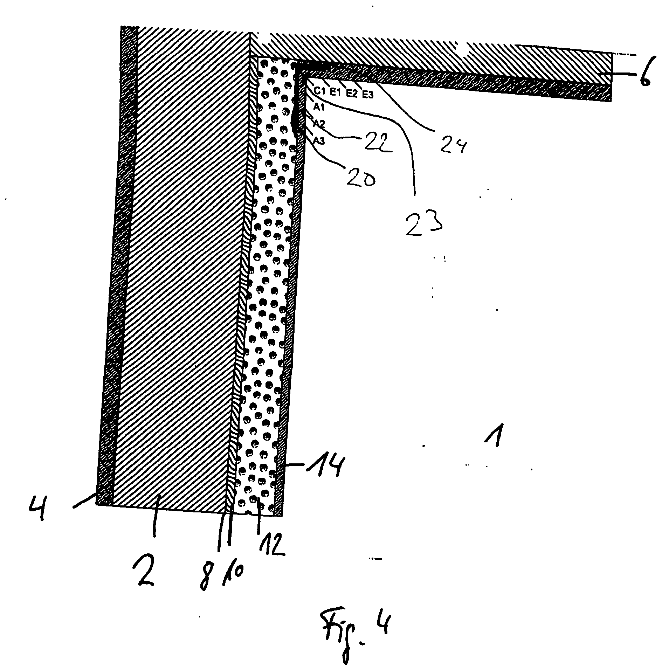

Figur 4 zeigt schließlich eine alternative Variante der Ausführungsform gemäß Figur 3. Der Wärmeleiter 20 ist bei dieser Variante mit dem ersten Schenkel 22 erneut mittels Klebens an der ersten Wärmedämmung 12 befestigt. Der zweite Abschnitt 24 des Wärmeleiters 20 liegt hier nicht an einem Wärmedämmstreifen an, sondern ist in dem Innenputz der einbindenden Wand 6 eingebettet. Auch auf diese Weise kann ein zu starker Wärmeeintrag in die einbindende Wand 6 vermieden werden, gleichwohl gelingt eine Temperaturerhöhung im Eckbereich 23.

Selbstverständlich ist es auch möglich, den Wärmeleiter 20 derart auszugestalten, dass dieser nur über den ersten Abschnitt 22, nicht aber auch über den zweiten Abschnitt 24 verfügt. Auch mit einer solchen Ausführungsform (nicht abgebildet) kann Wärmeenergie aus dem Innenraum 1 in den Eckbereich 23 von erster Wärmedämmung und einbindender Wand 6 transportiert werden, wodurch zum einen die Temperatur der kältesten Stelle an der Oberfläche im Eckbereich erhöht und unter Umständen auch in Richtung des Innenraums entlang der einbindenden Wand 6 verschoben werden kann. Indem die Temperaturdifferenz zwischen Innenraumtemperatur und kältester Oberflächentemperatur mit Hilfe des Wärmeleiters verringert wird und indem gegebenenfalls zusätzlich die kälteste Stelle an der Oberfläche der einbindenden Wand 6 in Richtung des Innenraums verschoben wird, gelingt eine signifikante Reduzierung der Gefahr der Feuchte- und/oder Schimmelbildung.

Bei einer Simulationsrechnung unter Zugrundelegung einer Innentemperatur von 20°C und einer Außentemperatur von z.B. -5° C ergeben sich die kältesten Temperaturen in der mit dem Buchstaben C gekennzeichneten Ecke im Eckbereich 23 von erster Wärmedämmung zu einbindender Wand für die Ausgestaltungen gemäß Figuren 1 und 2. Während allerdings bei der Variante gemäß Figur 1 die Temperaturdifferenz zwischen Innenraumtemperatur von 20° C und der Temperatur an der kältesten Stelle C mehr als 4° C beträgt, ist diese Temperaturdifferenz durch den aus dem Stand der Technik bekannten Wärmedämmstreifen auf 2°C reduziert worden. Bei dieser geringen Temperaturdifferenz ist in der Regel nicht mehr von Feuchte- bzw. Schimmelproblemen auszugehen. Gleichwohl wird durch den zusätzlichen, sich entlang der einbindenden Wand 6 erstreckenden Dämmstreifen 21 das Raumbild erheblich beeinträchtigt und der Nutzungskomfort stark reduziert.

Bei der erfindungsgemäßen Ausführungsvariante gemäß Figur 3 wird die kälteste Stelle im Eckbereich von erster Wärmedämmung zu einbindender Wand 6 weg von dem Eckpunkt C zu dem Messpunkt E2 verschoben. Auch geht mit Verwendung des Wärmeleiters eine Erhöhung der Temperatur an dieser kältesten Stelle einher. Diese liegt nun nur noch bei etwa 2°C unter der Temperatur des Innenraums. Im Bereich des Eckpunkts C, in dem die Luftzirkulation am geringsten ist, wird eine Temperaturdifferenz von weniger als 2° C berechnet. Somit ist durch die in Figur 3 wiedergegebene Variante des erfindungsgemäßen Verfahrens die Gefahr von Feuchte- bzw. Schimmelbildung signifikant zurückgedrängt bzw. total unterbunden worden.

Selbst bei der Variante gemäß Figur 4, bei der die kälteste Temperatur an der Messstelle C ermittelt wird, kommt es zu einer signifikanten Steigerung der Temperatur an dieser kältesten Stelle, die nur noch ungefähr 2,5°C unterhalb der Innenraumtemperatur liegt.

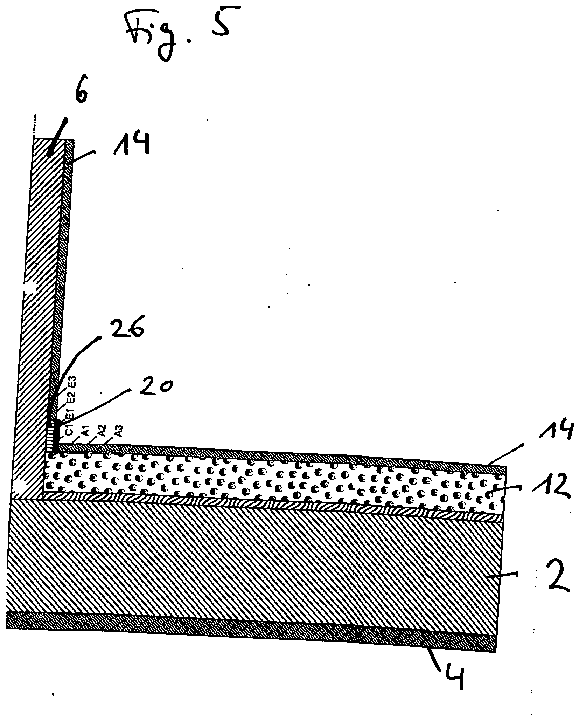

Figur 5 zeigt eine erfindungsgemäße Ausführungsvariante, bei der der Wärmeleiter 20 nicht die Form eines Eckwinkelprofils hat, sondern in Form eines Metallblechs flächig ausgestaltet ist und ausschließlich über eine Erstreckung entlang dem einbindenden Bauteil 6 verfügt. Zwischen dem Wärmeleiter 20 und der einbindenden Wand 6 ist eine wärmedämmende Materialbahn 26 vorgesehen. Der Wärmeleiter 20 sowie die Materialbahn 26 stoßen bei der gezeigten Ausführungsvariante direkt an die Wärmedämmung 12 an. In der dargestellten Ausführungsform ist der Wärmeleiter 20 durch eine Putzschicht 14 abgedeckt. Selbstverständlich kann der Wärmeleiter auch auf einer solchen Putzschicht aufliegen oder in eine solche eingebettet sein, z.B. einen bündigen Abschluss mit dieser Putzschicht bilden. Auch bei der Ausführungsvariante gemäß Figur 5 hat sich gezeigt, dass sich die Temperatur im Eckbereich 23 signifikant erhöhen lässt, so dass die Gefahr von Feuchte- und/oder Schimmelbildung gebannt, jedenfalls reduziert ist. Selbstverständlich kann der Wärmeleiter gemäß Figur 5 sich auch entlang der einbindenden Wand 6 in die Wärmedämmung 12 hinein bzw. entlang der Wärmedämmung 12 erstrecken (nicht abgebildet).

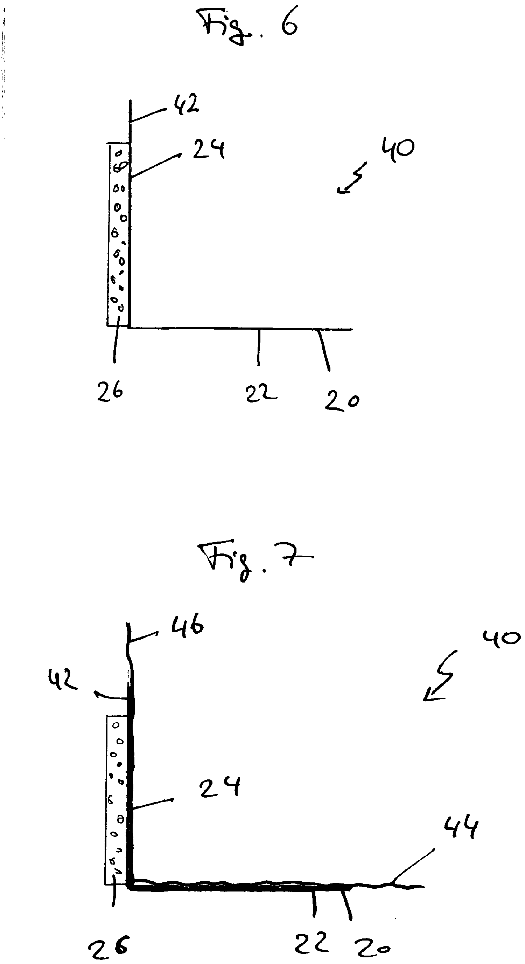

Figur 6 zeigt ein Eckwinkelprofil 40, enthaltend den Wärmeleiter 20 in Form eines gebogenen, vorzugsweise gelochten Metallblechs aus einem ersten Schenkel 22 und einem zweiten Schenkel 24. An dem zweiten Schenkel 24 ist befestigungsseitig eine Wärmedämmung 26 in Form einer Materialbahn vorgesehen, die sich im Wesentlichen über die ganze Höhe des zweiten Schenkels 24 erstreckt und vorzugsweise bündig mit dem Übergang zum ersten Schenkel 22 abschließt. An dem dem ersten Schenkel 22 gegenüberliegenden Ende des zweiten Schenkels 24 liegt ein Abschnitt 42 vor, der nicht mehr durch die Wärmedämmung 26 abgedeckt wird. Dieser Abschnitt 42 weist zur besseren Anbindung an eine aufzubringende Schutzschicht Löcher (nicht abgebildet) auf, beispielsweise in Form eines Lochblechs.

Figur 7 entnimmt man eine Weiterentwicklung des Eckwinkelprofils 40 gemäß Figur 6.

Zusätzlich verfügt das Eckwinkelprofil 40 gemäß Figur 7 hierüber flexible Gewebebahnen 44 und 46, die auf der dem Raum zugewandten Seite von erstem bzw. zweiten Schenkel 22 und 24 angebracht sind und die sich über die Enden bzw. Ränder von erstem und zweitem Schenkel 22, 24 hinaus erstrecken. Mit diesen sich über die Enden bzw. Ränder von erstem und zweitem Schenkel erstreckenden flexiblen Gewebebahnen 44, 46 gelingt eine besonders zuverlässige und rissfreie Einbettung des Eckwinkelprofils auf einer Wärmedämmung bzw. auf einem einbindenden Bauteil anzubringenden Putzschicht.

Es hat sich gezeigt, dass sich die ausgeprägtesten Oberflächentemperatursteigungen auf der Oberfläche der einbindenden Wand, bei identischer Blechgröße, einstellen, je länger der Schenkel auf der einbindenden Wand ist, wenn gleichzeitig zwischen diesem zweiten Abschnitt/Schenkel und der einbindenden Wand ein entsprechend dimensionierter Dämmstreifen vorliegt.

Der Einsatz eines solchen Wärmedämmstreifens hat sich auch schon deshalb als vorteilhaft erwiesen, als dadurch der Wärmedurchgang durch die einbindende Wand verringert und Wärmeenergieverluste vermieden werden.

Unabhängig davon, ob ein solcher Wärmedämmstreifen eingesetzt wird, geht mit den erfindungsgemäßen Verfahren keine optische Beeinträchtigung einher, und zwar ohne dass Gegenüber den Lösungsansätzen aus dem Stand der Technik Zugeständnisse in Richtung eines höheren Risikos der Schimmelbildung gemacht werden müssen.

## Patentansprüche

1. Gebäude oder Bestandteil hiervon, umfassend
mindestens eine Gebäudeaußenwand (2) mit einer ersten Seite, die eine Außenseite ist, und einer gegenüberliegenden zweiten Seite, die eine Innenseite ist, (8),
wobei an der zweiten Seite (8) der Gebäudeaußenwand (2) mindestens eine erste Wärmedämmung (12) mit einer dieser zweiten Seite (8) der Gebäudeaußenwand (2) zugewandten Seite und einer dieser zweiten Seite (8) abgewandten Seite vorliegt; mindestens ein sich von der zweiten Seite (8) der Gebäudeaußenwand (2) erstreckendes einbindendes Bauteil (6) in Form einer einbindenden Wand, eines einbindenden Bodens und/oder einer einbindenden Decke,
wobei die erste Wärmedämmung (12) an der zweiten Seite (8) der Gebäudeaußenwand (2) sich im Wesentlichen bis zum einbindenden Bauteil (6) erstreckt, so dass durch die erste Wärmedämmung (12) und das einbindende Bauteil (6) ein Eckbereich (23) gebildet wird;
mindestens einen Wärmeleiter (20), wobei dieser Wärmeleiter (20) über eine höhere Wärmeleitfähigkeit verfügt als die erste Wärmedämmung (12), wobei der Wärmeleiter (20) ein Eckwinkelprofil mit einem ersten Schenkel als dem ersten Abschnitt oder als Bestandteil hiervon und einem zweiten Schenkel als dem zweiten Abschnitt (24) oder als Bestandteil hiervon umfasst oder darstellt
wobei der Wärmeleiter (20) zumindest abschnittsweise in dem Eckbereich (23) angebracht oder positioniert ist, so dass Wärmeenergie über diesen Wärmeleiter (20) in diesen Eckbereich (23) transferierbar ist, wobei
der erste Abschnitt (22) des Wärmeleiters (20) mit dem zweiten Abschnitt (24) des Wärmeleiters (20) wärmeleitend verbunden ist, und wobei der erste Abschnitt (22) sich mindestens bereichsweise entlang der ersten Wärmedämmung (12) erstreckt und wobei der zweite Abschnitt (24) sich mindestens bereichsweise entlang dem einbindenden Bauteil (6) erstreckt, wobei
der erste Abschnitt (22) des Wärmeleiters (20) mit der ersten Wärmedämmung (12), mittelbar oder unmittelbar, verbunden ist, wobei
der zweite Abschnitt (24) des Wärmeleiters (20) mit dem einbindenden Bauteil (6), mittelbar oder unmittelbar, verbunden ist, wobei
der Warmeleiter (20) über eine Erstreckung beginnend an dem bzw. benachbart zum einbindenden Bauteil (6) entlang der ersten Wärmedämmung (12) benachbart zur oder an der ersten Wärmedämmung (12) verfügt und wobei
der Wärmeleiter (20) über eine Erstreckung beginnend an dem bzw. benachbart zur ersten Wärmedämmung (12) entlang der einbindenden Wand benachbart zur oder an der einbindenden Wand verfügt.

2. Gebäude oder Gebäudebestandteil nach Anspruch 1, **dadurch gekennzeichnet, dass** der Wärmeleiter (20) Metall und/oder Putz, enthaltend Metallfasern, -pulver, -flitter und/oder -kugeln, geschäumtes Polymermaterial, enthaltend Metallfasern, -pulver,-flitter und/oder -kugeln, und/oder Erze umfasst oder zumindest in Teilen aus Aluminium oder Stahl und/oder Putz, enthaltend Metallfasern, -pulver, -flitter und/oder-kugeln, geschäumten Polymermaterial, enthaltend Metallfasern, -pulver, -flitter und/oder -kugeln, und/oder Erzen gebildet ist.

3. Gebäude oder Gebäudebestandteil nach Anspruch 1 oder 2, **dadurch gekennzeichnet, dass**
der Wärmeleiter (20) in Kontakt mit einer auf dem einbindenden Bauteil (6) vorliegenden und/oder in das einbindende Bauteil (6) eingelassenen zweiten Wärmedämmung steht, die über einen höheren Wärmedurchlasswiderstand verfügt als das einbindende Bauteil (6).

4. Gebäude oder Gebäudebestandteil nach einem der Ansprüche 1 bis 3, **dadurch gekennzeichnet, dass**
die erste und/oder zweite Wärmedämmung (12, 26) umfasst oder zumindest in Teilen besteht aus Materialien ausgewählt aus geschäumten oder expandierten Kunststoffen; Mineralwolle oder -fasern; Mineralschäumen; leichtem Calciumsilikat; Vakuumisolationspaneelen; Aerogelen; gefällten oder pyrogenen Kieselsauren; Mikrohohlfasern; Dammstoffen auf Cellulose- oder Polymilchsäurebasis; Korkplatten oder Korke; Schafwolle; sowie pflanzlichen Faserprodukten.

5. Gebäude oder Gebäudebestandteil nach einem der vorangehenden Ansprüche,
**dadurch gekennzeichnet, dass**
der erste Schenkel des Eckwinkelprofils eine Erstreckung entlang der ersten Wärmedämmung (12) im Bereich von 1 bis 25 cm aufweist und dass der zweite Schenkel des Eckwinkelprofils eine Erstreckung entlang des einbindenden Bauteils (6) und/oder entlang der zweiten Wärmedämmung im Bereich von 3 bis 25 cm aufweist und/oder dass der erste und/oder zweite Schenkel des Eckwinkelprofils eine durchschnittliche Dicke im Bereich von 0,2 bis 5 mm aufweist.

6. Gebäude oder Gebäudebestandteil nach einem der Ansprüche 1 bis 5, **dadurch gekennzeichnet, dass**
der Wärmeleiter (20) Metall in Form eines unperforierten Metallblechs oder einer unperforierten Metallfolie, eines perforierten Metallblechs, eines Metallnetzes, Metallgewebes und/oder Metallvlieses umfasst oder hieraus gebildet ist.

7. Gebäude oder Gebäudebestandteil nach Anspruch 6, **dadurch gekennzeichnet, dass** der Wärmeleiter (20) ein Stahlblech, ein Aluminiumblech oder ein Kupferblech umfasst oder darstellt oder dass der Wärmeleiter (20) ein durchbrochenes Stahlblech, Aluminiumblech oder Kupferblech umfasst oder darstellt.

8. Gebäude oder Gebäudebestandteil nach einem der Ansprüche 1 bis 7, **dadurch gekennzeichnet, dass**
der Wärmeleiter (20) über eine Wärmetransportfähigkeit (Produkt aus durchschnittlicher Materialdicke und Wärmeleitfähigkeit) von mindestens 20 mW/K verfügt.

9. Gebäude oder Gebäudebestandteil nach einem der Ansprüche 1 bis 8, **dadurch gekennzeichnet, dass**
auf dem Wärmeleiter (20) mindestens eine Putzschicht (14) vorliegt oder dass der Wärmeleiter (20) in mindestens einer Putzschicht (14) vorliegt.

10. Gebäude oder Gebäudebestandteil nach einem der Ansprüche 1 bis 9, **dadurch gekennzeichnet, dass**
sich der Wärmeleiter (20) im Wesentlichen über die gesamte Länge der ersten Wärmedämmung (12) im Eckbereich (23) von erster Wärmedämmung und einbindendem Bauteil (6) erstreckt.

11. Gebäude oder Gebäudebestandteil nach einem der Ansprüche 1 bis 10, **dadurch gekennzeichnet, dass**
das einbindende Bauteil (6) Bestandteil eines Badezimmers oder Nassraums ist.

12. Verfahren zur Verminderung oder zum Unterbinden von Feuchte- und/oder Schimmelbildung bzw. -schäden in wärmegedämmten Innenräumen von Gebäuden oder von Bestandteilen hiervon, umfassend mindestens eine Gebäudeaußenwand (2) mit einer ersten Seite, die eine Außenseite ist, und einer gegenüberliegenden zweiten Seite, die eine Innenseite ist, (8), wobei an der zweiten Seite (8) der Gebäudeaußenwand (2) mindestens eine erste Wärmedämmung (12) mit einer dieser zweiten Seite (8) der Gebäudeaußenwand (2) zugewandten Seite und einer dieser zweiten Seite (8) abgewandten Seite vorliegt, mindestens ein sich von der zweiten Seite (8) der Gebäudeaußenwand (2) erstreckendes einbindendes Bauteil (6) in Form einer einbindenden Wand, eines einbindenden Bodens und/oder einer einbindenden Decke, wobei die erste Wärmedämmung (12) an der zweiten Seite (8) der Gebäudeaußenwand (2) sich bis zum einbindenden Bauteil (6) erstreckt, so dass durch die erste Wärmedämmung (12) und das einbindende Bauteil (6) ein Eckbereich (23) gebildet wird;
Zurverfügungstellung mindestens eines Wärmeleiters (20), wobei der Wärmeleiter (20) ein Eckwinkelprofil mit einem ersten Schenkel als dem ersten Abschnitt oder als Bestandteil hiervon und einem zweiten Schenkel als dem zweiten Abschnitt (24) oder als Bestandteil hiervon umfasst oder darstellt, wobei dieser Wärmeleiter (20) über eine höhere Wärmeleitfähigkeit verfügt als die erste Wärmedämmung (12);
Positionieren oder Anbringen des Wärmeleiters (20) zumindest abschnittsweise in dem Eckbereich, so dass Wärmeenergie über diesen Wärmeleiter (20) in diesen Eckbereich (23) transferierbar ist, wobei
der erste Abschnitt (22) des Wärmeleiters (20) mit dem zweiten Abschnitt (24) des Wärmeleiters (20) wärmeleitend verbunden ist, und wobei der erste Abschnitt (22) sich mindestens bereichsweise entlang der ersten Wärmedämmung (12) erstreckt und wobei der zweite Abschnitt (24) sich mindestens bereichsweise entlang dem einbindenden Bauteil (6) erstreckt,
wobei man den ersten Abschnitt des Wärmeleiters (20) mit der ersten Wärmedämmung (12), mittelbar oder unmittelbar, verbindet und/oder dass man den zweiten Abschnitt (24) des Wärmeleiters (20) mit dem einbindenden Bauteil (6), mittelbar oder unmittelbar, verbindet und
wobei der Wärmeleiter (20) über eine Erstreckung beginnend an dem bzw. benachbart zum einbindenden Bauteil (6) entlang der ersten Wärmedämmung (12) benachbart zur oder an der ersten Wärmedämmung (12) angebracht vorliegt und wobei der Wärmeleiter (20) über eine Erstreckung beginnend an dem bzw. benachbart zur ersten Wärmedämmung (12) entlang der einbindenden Wand benachbart zur oder an der einbindenden Wand angebracht vorliegt.

13. Verfahren nach Anspruch 12, **dadurch gekennzeichnet, dass** der Wärmeleiter (20) über mindestens einen ersten Abschnitt und mindestens einen zweiten Abschnitt (24) verfügt, der mit dem ersten Abschnitt wärmeleitend verbunden ist, und dass der erste Abschnitt (22) sich mindestens bereichsweise entlang der ersten Wärmedämmung (12) erstreckt, wobei man diesen ersten Abschnitt benachbart zur oder an der ersten Wärmedämmung (12) anbringt, und dass der zweite Abschnitt (24) sich mindestens bereichsweise entlang dem einbindenden Bauteil (6) erstreckt, wobei man diesen zweiten Abschnitt (24) benachbart zum oder an dem einbindenden Bauteil (6) anbringt.

14. Verfahren nach Anspruch 12 oder 13, **dadurch gekennzeichnet, dass** der Wärmeleiter (20) Metall und/oder Putz, enthaltend Metallfasern, -pulver, -flitter und/oder -kugeln, geschäumtes Polymermaterial, enthaltend Metallfasern, -pulver, - flitter und/oder -kugeln, und/oder Erze umfasst oder zumindest in Teilen aus Aluminium oder Stahl und/oder Putz, enthaltend Metallfasern, -pulver, -flitter und/oder-kugeln, geschäumten Polymermaterial, enthaltend Metallfasern, -pulver, -flitter und/oder -kugeln, und/oder Erzen gebildet ist.

15. Verfahren nach einem der Ansprüche 12 bis 14, **dadurch gekennzeichnet, dass** der Wärmeleiter (20) in Kontakt mit einer auf dem einbindenden Bauteil (6) vorliegenden und/oder in das einbindende Bauteil (6) eingelassenen zweiten Wärmedämmung steht, die über einen höheren Wärmedurchlasswiderstand verfügt als das einbindende Bauteil (6).

16. Verfahren nach einem der Ansprüche 12 bis 15, **dadurch gekennzeichnet, dass** die erste und/oder zweite Wärmedämmung (12, 26) einen Wärmedurchlasswiderstand von mindestens 0,30 K m² / W und/oder eine Wärmeleitfähigkeit von maximal 40 mW / (m K) aufweist.

17. Verfahren nach einem der Ansprüche 12 bis 16, **dadurch gekennzeichnet, dass** die erste und/oder zweite Wärmedämmung (12, 26) umfasst oder zumindest in Teilen besteht aus Materialien ausgewählt aus geschäumten oder expandierten Kunststoffen; Mineralwolle oder -fasern; Mineralschäumen; leichtem Calciumsilikat; Vakuumisolationspaneelen; Aerogelen; gefällten oder pyrogenen Kieselsäuren; Mikrohohlfasern; Dämmstoffen auf Cellulose- oder Polymilchsäurebasis; Korkplatten oder Korke; Schafwolle; sowie pflanzlichen Faserprodukten.

18. Verfahren nach einem der Ansprüche 12 bis 17, **dadurch gekennzeichnet, dass** der erste Abschnitt (22) des Wärmeleiters (20) oder der erste Schenkel des Eckwinkelprofils eine Länge im Bereich von 1 bis 25 cm aufweist und dass der zweite Abschnitt (24) des Wärmeleiters (20) oder der zweite Schenkel des Eckwinkelprofils eine Länge im Bereich von 3 bis 25 cm aufweist und/oder dass der erste und/oder zweite Abschnitt (24) des Wärmeleiters (20) oder der erste und/oder zweite Schenkel des Eckwinkelprofils eine durchschnittliche Dicke im Bereich von 0,2 bis 5 mm aufweist.

19. Verfahren nach einem der Ansprüche 12 bis 18, **dadurch gekennzeichnet, dass** der Wärmeleiter (20) Metall in Form eines unperforierten Metallblechs oder einer unperforierten Metallfolie, eines perforierten Metallblechs, eines Metallnetzes, Metallgewebes und/oder Metallvlieses umfasst oder hieraus gebildet ist.

20. Verfahren nach Anspruch 19, **dadurch gekennzeichnet, dass** der Wärmeleiter (20) ein Stahlblech, ein Aluminiumblech oder ein Kupferblech umfasst oder darstellt oder dass der Wärmeleiter (20) ein durchbrochenes Stahlblech, Aluminiumblech oder Kupferblech umfasst oder darstellt.

21. Verfahren nach einem der Ansprüche 12 bis 20, **dadurch gekennzeichnet, dass** der Wärmeleiter (20) über eine Wärmetransportfähigkeit (Produkt aus durchschnittlicher Materialdicke und Wärmeleitfähigkeit) von mindestens 20 mW/K verfügt.

22. Verfahren nach einem der Ansprüche 12 bis 21, **dadurch gekennzeichnet, dass** man auf den Wärmeleiter (20) eine Putzschicht (14) anbringt oder dass man den Wärmeleiter (20) in mindestens eine Putzschicht (14) einbringt und/oder dass die erste und/oder zweite Wärmedämmung (12, 26) raumseitig und/oder das einbindende Bauteil (6) mindestens eine Putzschicht (14) umfasst.

23. Verfahren nach einem der Ansprüche 12 bis 22, **dadurch gekennzeichnet, dass** sich der Wärmeleiter (20) im Wesentlichen über die gesamte Länge bzw. Höhe der ersten Wärmedämmung (12) im Eckbereich (23) von erster Wärmedämmung und einbindendem Bauteil (6) erstreckt.

24. Verfahren nach einem der Ansprüche12 bis 23, **dadurch gekennzeichnet, dass** das einbindende Bauteil (6) Bestandteil eines Badezimmers oder Nassraums ist.

## Claims

1. A building or component thereof comprising
at least one building exterior wall (2) with a first side which is an outside and an opposing second side which is an inside (8),
wherein, on the second side (8) of the building exterior wall (2), there is at least a first thermal insulation (12) with a side facing towards said second side (8) of the building exterior wall (2) and a side facing away from said second side (8); at least one linking part (6) extending from the second side (8) of the building exterior wall (2) in the form of a linking wall, a linking floor and/or a linking ceiling,
wherein the first thermal insulation (12) on the second side (8) of the building exterior wall (2) extends substantially up to the linking part (6), such that the first thermal insulation (12) and the linking part (6) form a corner region (23);
at least one heat conductor (20), wherein this heat conductor (20) has a higher thermal conductivity than the first thermal insulation (12), wherein the heat conductor (20) comprises or constitutes a corner profile with a first limb as the first portion or as a component thereof and a second limb as the second portion (24) or as a component thereof,
wherein, at least in portions, the heat conductor (20) is mounted or positioned in the corner region (23) such that thermal energy is transferable via this heat conductor (20) into said corner region (23), wherein
the first portion (22) of the heat conductor (20) is thermally conductively connected to the second portion (24) of the heat conductor (20), and wherein the first portion (22) extends at least in places along the first thermal insulation (12) and wherein the second portion (24) extends at least in places along the linking part (6), wherein
the first portion (22) of the heat conductor (20) is indirectly or directly connected to the first thermal insulation (12), wherein
the second portion (24) of the heat conductor (20) is indirectly or directly connected to the linking part (6), wherein
the heat conductor (20) has an extent beginning at or adjacent to the linking part (6) along the first thermal insulation (12) adjacent to or on the first thermal insulation (12) and wherein
the heat conductor (20) has an extent beginning at or adjacent to the first thermal insulation (12) along the linking wall adjacent to or on the linking wall.

2. The building or building component according to Claim 1, **characterized in that** the heat conductor (20) comprises metal and/or plaster containing metal fibers, powder, flakes and/or spheres, foamed polymer material containing metal fibers, powder, flakes and/or spheres, and/or ores or is formed at least in part from aluminum or steel and/or plaster containing metal fibers, powder, flakes and/or spheres, foamed polymer material containing metal fibers, powder, flakes and/or spheres, and/or ores.

3. The building or building component according to Claim 1 or 2, **characterized in that** the heat conductor (20) is in contact with second thermal insulation which is present on the linking part (6) and/or is set into the linking part (6), said second thermal insulation having a higher thermal resistance than the linking part (6).

4. The building or building component according to any one of Claims 1 to 3,
**characterized in that**
the first and/or second thermal insulation (12, 26) at least in part comprises or consists of materials selected from foamed or expanded plastics; mineral wool or fibers; mineral foams; lightweight calcium silicate; vacuum insulation panels; aerogels; precipitated or pyrogenic silicas; hollow microfibers; cellulose- or polylactic acid-based insulation materials; cork sheets or corks; sheep's wool; and plant-based fiber products.

5. The building or building component according to any one of the preceding claims,
**characterized in that**
the first limb of the corner profile has an extent along the first thermal insulation (12) in the range from 1 to 25 cm and **in that** the second limb of the corner profile has an extent along the linking part (6) and/or along the second thermal insulation in the range from 3 to 25 cm and/or **in that** the first and/or second limb of the corner profile has an average thickness in the range from 0.2 to 5 mm.

6. The building or building component according to any one of Claims 1 to 5,
**characterized in that**
the heat conductor (20) comprises or is formed from metal in the form of an unperforated metal sheet or an unperforated metal foil, a perforated metal sheet, a metal mesh or a woven and/or non-woven metal fabric.

7. The building or building component according to Claim 6, **characterized in that** the heat conductor (20) comprises or constitutes a steel sheet, an aluminum sheet or a copper sheet or **in that** the heat conductor (20) comprises or constitutes a pierced steel sheet, aluminum sheet or copper sheet.

8. The building or building component according to any one of Claims 1 to 7,
**characterized in that**
the heat conductor (20) has a heat-transfer capacity (product of average material thickness and thermal conductivity) of at least 20 mW/K.

9. The building or building component according to any one of Claims 1 to 8,
**characterized in that**
at least one plaster layer (14) is present on the heat conductor (20) or **in that** the heat conductor (20) is present in at least one plaster layer (14).

10. The building or building component according to any one of Claims 1 to 9,
**characterized in that**
the heat conductor (20) extends substantially over the entire length of the first thermal insulation (12) in the corner region (23) from the first thermal insulation and linking part (6).

11. The building or building component according to any one of Claims 1 to 10,
**characterized in that**
the linking part (6) is a component of a bathroom or wet room.

12. A method for reducing or preventing moisture and/or mold growth or damage in thermally insulated interior rooms of buildings or components thereof comprising at least one building exterior wall (2) with a first side which is an outside and an opposing second side which is an inside (8), wherein, on the second side (8) of the building exterior wall (2), there is at least a first thermal insulation (12) with a side facing towards said second side (8) of the building exterior wall (2) and a side facing away from said second side (8),
at least one linking part (6) extending from the second side (8) of the building exterior wall (2) in the form of a linking wall, a linking floor and/or a linking ceiling, wherein the first thermal insulation (12) on the second side (8) of the building exterior wall (2) extends up to the linking part (6),
such that the first thermal insulation (12) and the linking part (6) form a corner region (23);
provision of at least one heat conductor (20), wherein the heat conductor (20) comprises or constitutes a corner profile with a first limb as the first portion or as a component thereof and a second limb as the second portion (24) or as a component thereof, wherein
this heat conductor (20) has a higher thermal conductivity than the first thermal insulation (12);
positioning or mounting the heat conductor (20) at least in portions in the corner region,
such that thermal energy is transferable via this heat conductor (20) into this corner region (23), wherein
the first portion (22) of the heat conductor (20) is thermally conductively connected to the second portion (24) of the heat conductor (20), and wherein the first portion (22) extends at least in places along the first thermal insulation (12) and wherein the second portion (24) extends at least in places along the linking part (6),
wherein the first portion of the heat conductor (20) is indirectly or directly connected to the first thermal insulation (12), and/or wherein the second portion (24) of the heat conductor (20) is indirectly or directly connected to the linking part (6) and
wherein the heat conductor (20) is mounted over an extent beginning at or adjacent to the linking part (6) along the first thermal insulation (12) adjacent to or on the first thermal insulation (12) and wherein the heat conductor (20) is mounted over an extent beginning at or adjacent to the first thermal insulation (12) along the linking wall adjacent to or on the linking wall.

13. The method according to Claim 12, **characterized in that** the heat conductor (20) has at least one first portion and at least one second portion (24) which is thermally conductively connected to the first portion, and **in that** the first portion (22) extends at least in places along the first thermal insulation (12), wherein this first portion is mounted adjacent to or on the first thermal insulation (12), and **in that** the second portion (24) extends at least in places along the linking part (6), wherein this second portion (24) is mounted adjacent to or on the linking part (6).

14. The method according to Claim 12 or 13, **characterized in that** the heat conductor (20) comprises metal and/or plaster containing metal fibers, powder, flakes and/or spheres, foamed polymer material containing metal fibers, powder, flakes and/or spheres, and/or ores or is formed at least in part from aluminum or steel and/or plaster containing metal fibers, powder, flakes and/or spheres, foamed polymer material containing metal fibers, powder, flakes and/or spheres, and/or ores.

15. The method according to any one of Claims 12 to 14, **characterized in that** the heat conductor (20) is in contact with second thermal insulation which is present on the linking part (6) and/or is set into the linking part (6), said second thermal insulation having a higher thermal resistance than the linking part (6).

16. The method according to any one of Claims 12 to 15, **characterized in that** the first and/or second thermal insulation (12, 26) has a thermal resistance of at least 0.30 K m²/W and/or a thermal conductivity of at most 40 mW/(m K).

17. The method according to any one of Claims 12 to 16, **characterized in that** the first and/or second thermal insulation (12, 26) at least in part comprises or consists of materials selected from foamed or expanded plastics; mineral wool or fibers; mineral foams; lightweight calcium silicate; vacuum insulation panels; aerogels; precipitated or pyrogenic silicas; hollow microfibers; cellulose- or polylactic acid-based insulation materials; cork sheets or corks; sheep's wool; and plant-based fiber products.

18. The method according to any one of Claims 12 to 17, **characterized in that** the first portion (22) of the heat conductor (20) or the first limb of the corner profile has a length in the range from 1 to 25 cm and **in that** the second portion (24) of the heat conductor (20) or the second limb of the corner profile has a length in the range from 3 to 25 cm and/or **in that** the first and/or second portion (24) of the heat conductor (20) or of the first and/or second limb of the corner profile has an average thickness in the range from 0.2 to 5 mm.

19. The method according to any one of Claims 12 to 18, **characterized in that** the heat conductor (20) comprises or is formed from metal in the form of an unperforated metal sheet or an unperforated metal foil, a perforated metal sheet, a metal mesh or a woven and/or non-woven metal fabric.

20. The method according to Claim 19, **characterized in that** the heat conductor (20) comprises or constitutes a steel sheet, an aluminum sheet or a copper sheet or **in that** the heat conductor (20) comprises or constitutes a pierced steel sheet, aluminum sheet or copper sheet.

21. The method according to any one of Claims 12 to 20, **characterized in that** the heat conductor (20) has a heat-transfer capacity (product of average material thickness and thermal conductivity) of at least 20 mW/K.

22. The method according to any one of Claims 12 to 21, **characterized in that** a plaster layer (14) is applied to the heat conductor (20) or **in that** the heat conductor (20) is introduced into at least one plaster layer (14) and/or **in that**, on the room side, the first and/or second thermal insulation (12, 26) and/or the linking part (6) comprises at least one plaster layer (14).

23. The method according to any one of Claims 12 to 22, **characterized in that** the heat conductor (20) extends substantially over the entire length or height of the first thermal insulation (12) in the corner region (23) from the first thermal insulation and linking part (6).

24. The method according to any one of Claims 12 to 23, **characterized in that** the linking part (6) is a component of a bathroom or wet room.

## Revendications

1. Bâtiment ou partie de celui-ci, comprenant
au moins une paroi extérieure de bâtiment (2) avec un premier côté, lequel est un côté extérieur, et un deuxième côté opposé, lequel est un côté intérieur (8),
au moins une première isolation thermique (12) avec un côté tourné vers ledit deuxième côté (8) de la paroi extérieure de bâtiment (2) et un côté opposé au susdit deuxième côté (8) étant présente sur le deuxième côté (8) de la paroi extérieure de bâtiment (2) ;
au moins un élément de construction de liaison (6) s'étendant à partir du deuxième côté (8) de la paroi extérieure de bâtiment (2) sous la forme d'une paroi de liaison, d'un sol de liaison et/ou d'un plafond de liaison,
la première isolation thermique (12) sur le deuxième côté (8) de la paroi extérieure de bâtiment (2) s'étendant essentiellement jusqu'à l'élément de construction de liaison (6), de telle sorte qu'une zone d'angle (23) est formée par la première isolation thermique (12) et par l'élément de construction de liaison (6) ;
au moins un conducteur de chaleur (20), ledit conducteur de chaleur (20) disposant d'une conductivité thermique supérieure à la première isolation thermique (12), le conducteur de chaleur (20) comprenant ou représentant une cornière d'angle avec un premier bras comme première section ou comme composant de celle-ci et un deuxième bras comme deuxième section (24) ou comme composant de celle-ci,
le conducteur de chaleur (20) étant disposé ou positionné au moins par section dans la zone d'angle (23), de telle sorte que de l'énergie thermique est transférable par ledit conducteur de chaleur (20) dans ladite zone d'angle (23),
la première section (22) du conducteur de chaleur (20) étant reliée de façon thermoconductrice avec la deuxième section (24) du conducteur de chaleur (20), et la première section (22) s'étendant au moins partiellement le long de la première isolation thermique (12), et la deuxième section (24) s'étendant au moins partiellement le long de l'élément de construction de liaison (6),
la première section (22) du conducteur de chaleur (20) étant reliée avec la première isolation thermique (12), directement ou indirectement,
la deuxième section (24) du conducteur de chaleur (20) étant reliée avec l'élément de construction de liaison (6), directement ou indirectement,
le conducteur de chaleur (20) disposant d'une étendue commençant à, adjacente à, l'élément de construction de liaison (6) le long de la première isolation thermique (12), adjacente à ou sur, la première isolation thermique (12), et
le conducteur de chaleur (20) disposant d'une étendue commençant à, ou adjacente à, la première isolation thermique (12) le long de la paroi de liaison, adjacente à ou sur, la paroi de liaison.

2. Bâtiment ou partie de bâtiment selon la revendication 1, **caractérisé en ce que** le conducteur de chaleur (20) comprend du métal et/ou du crépi, comprenant des fibres, de la poudre, des paillettes et/ou des billes de métal, du matériau polymère moussé, comprenant des fibres, de la poudre, des paillettes et/ou des billes de métal et/ou des minerais, ou est formé au moins en partie d'aluminium ou d'acier et/ou de crépi, comprenant des fibres, de la poudre, des paillettes et/ou des billes de métal, du matériau polymère moussé, comprenant des fibres, de la poudre, des paillettes et/ou des billes de métal, et/ou de minerais.

3. Bâtiment ou partie de bâtiment selon la revendication 1 ou 2, **caractérisé en ce que** le conducteur de chaleur (20) est en contact avec une deuxième isolation thermique placée sur l'élément de construction de liaison (6) et/ou intégrée dans l'élément de construction de liaison (6), laquelle dispose d'une résistance au passage de la chaleur plus élevée que l'élément de construction de liaison (6).

4. Bâtiment ou partie de bâtiment selon l'une des revendications 1 à 3, **caractérisé en ce que**
la première et/ou la deuxième isolation thermique (12, 26) comprennent ou se composent au moins partiellement de matériaux sélectionnés parmi des matières plastiques moussées ou expansées ; de la laine minérale ou des fibres minérales ; des mousses minérales ; du silicate de calcium léger ; des panneaux d'isolation sous vide ; des aérogels ; des acides siliciques précipités ou pyrogènes ; des microfibres creuses ; des matériaux isolants à base de cellulose ou d'acide polylactique ; des plaques de liège ou du liège ; de la laine de mouton ; ainsi que des produits fibreux végétaux.

5. Bâtiment ou partie de bâtiment selon l'une des revendications précédentes, **caractérisé en ce que**
le premier bras de la cornière d'angle présente une étendue le long de la première isolation thermique (12) dans la plage de 1 à 25 cm, et **en ce que** le deuxième bras de la cornière d'angle présente une étendue le long de l'élément de construction de liaison (6) et/ou le long de la deuxième isolation thermique dans la plage de 3 à 25 cm, et/ou **en ce que** le premier et/ou le deuxième bras de la cornière d'angle présente une épaisseur moyenne dans la plage de 0,2 à 5 mm.

6. Bâtiment ou partie de bâtiment selon l'une des revendications 1 à 5, **caractérisé en ce que**
le conducteur de chaleur (20) comprend du métal sous la forme d'une tôle métallique non perforée ou d'une feuille métallique non perforée, d'une tôle métallique perforée, d'un filet métallique, d'un tissu métallique et/ou d'un non-tissé de métal, ou en est composé.

7. Bâtiment ou partie de bâtiment selon la revendication 6, **caractérisé en ce que** le conducteur de chaleur (20) comprend ou représente une tôle d'acier, une tôle d'aluminium ou une tôle de cuivre, ou **en ce que** le conducteur de chaleur (20) comprend ou représente une tôle d'acier, une tôle d'aluminium ou une tôle de cuivre ajourées.

8. Bâtiment ou partie de bâtiment selon l'une des revendications 1 à 7, **caractérisé en ce que**
le conducteur de chaleur (20) dispose d'une capacité de transport de la chaleur (produit de l'épaisseur de matériau moyenne et de la conductivité thermique) d'au moins 20 mW/K.

9. Bâtiment ou partie de bâtiment selon l'une des revendications 1 à 8, **caractérisé en ce qu'**
au moins une couche de crépi (14) est présente sur le conducteur de chaleur (20) ou **en ce que** le conducteur de chaleur (20) est présent dans au moins une couche de crépi (14).

10. Bâtiment ou partie de bâtiment selon l'une des revendications 1 à 9, **caractérisé en ce que**
le conducteur de chaleur (20) s'étend essentiellement sur toute la longueur de la première isolation thermique (12) dans la zone d'angle (23) de la première isolation thermique et de l'élément de construction de liaison (6).

11. Bâtiment ou partie de bâtiment selon l'une des revendications 1 à 10, **caractérisé en ce que**
l'élément de construction de liaison (6) fait partie intégrante d'une salle de bains ou d'une salle d'eau.

12. Procédé pour la réduction ou l'élimination de formation ou de dégâts d'humidité ou de moisissures dans des espaces intérieurs de bâtiments ou de parties de ceux-ci, avec isolation thermique, comprenant
au moins une paroi extérieure de bâtiment (2) avec un premier côté, lequel est un côté extérieur, et un deuxième côté opposé, lequel est un côté intérieur (8),
au moins une première isolation thermique (12) avec un côté tourné vers ledit deuxième côté (8) de la paroi extérieure de bâtiment (2) et un côté opposé au susdit deuxième côté (8) étant présente sur le deuxième côté (8) de la paroi extérieure de bâtiment (2),
au moins un élément de construction de liaison (6) s'étendant à partir du deuxième côté (8) de la paroi extérieure de bâtiment (2) sous la forme d'une paroi de liaison, d'un sol de liaison et/ou d'un plafond de liaison,
la première isolation thermique (12) sur le deuxième côté (8) de la paroi extérieure de bâtiment (2) s'étendant jusqu'à l'élément de construction de liaison (6),
de telle sorte qu'une zone d'angle (23) est formée par la première isolation thermique (12) et l'élément de construction de liaison (6) ;
la mise à disposition d'au moins un conducteur de chaleur (20), le conducteur de chaleur (20) comprenant ou représentant une cornière d'angle avec un premier bras comme première section ou comme composant de celle-ci et un deuxième bras comme deuxième section (24) ou comme composant de celle-ci,
ledit conducteur de chaleur (20) disposant d'une conductivité thermique plus élevée que la première isolation thermique (12) ;
le positionnement ou le montage du conducteur de chaleur (20) au moins partiellement dans la zone d'angle,
de telle sorte que l'énergie thermique est transférable dans ladite zone d'angle (23) par ledit conducteur de chaleur (20),
la première section (22) du conducteur de chaleur (20) étant reliée de façon thermoconductrice avec la deuxième section (24) du conducteur de chaleur (20), et la première section (22) s'étendant au moins partiellement le long de la première isolation thermique (12), et la deuxième section (24) s'étendant au moins partiellement le long de l'élément de construction de liaison (6),
la première section (22) du conducteur de chaleur (20) est reliée avec la première isolation thermique (12), directement ou indirectement, et/ou la deuxième section (24) du conducteur de chaleur (20) est reliée avec l'élément de construction de liaison (6), directement ou indirectement, et
le conducteur de chaleur (20) étant placé sur une étendue commençant à, ou adjacente à, l'élément de construction de liaison (6) le long de la première isolation thermique (12), adjacente à ou sur, la première isolation thermique (12), et le conducteur thermique (20) étant placé sur une étendue commençant à, ou adjacente à, la première isolation thermique (12) le long de la paroi de liaison, adjacente à ou sur, la paroi de liaison.

13. Procédé selon la revendication 12, **caractérisé en ce que**
le conducteur de chaleur (20) dispose d'au moins une première section et d'au moins une deuxième section (24), laquelle est reliée de façon thermoconductrice avec la première section, et **en ce que** la première section (22) s'étend au moins partiellement le long de la première isolation thermique (12), ladite première section étant placée de façon adjacente à ou sur la première isolation thermique (12), et **en ce que** la deuxième section (24) s'étend au moins partiellement le long de l'élément de construction de liaison (6), ladite deuxième section (24) étant placée de façon adjacente à ou surl'élément de construction de liaison (6).

14. Procédé selon la revendication 12 ou 13, **caractérisé en ce que**
le conducteur de chaleur (20) comprend du métal et/ou du crépi, comprenant des fibres, de la poudre, des paillettes et/ou des billes de métal, du matériau polymère expansé, comprenant des fibres, de la poudre, des paillettes et/ou des billes de métal et/ou des minerais, ou est formé au moins en partie d'aluminium ou d'acier et/ou de crépi, comprenant des fibres, de la poudre, des paillettes et/ou des billes de métal, du matériau polymère expansé, comprenant des fibres, de la poudre, des paillettes et/ou des billes de métal, et/ou de minerais.

15. Procédé selon l'une des revendications 12 à 14, **caractérisé en ce que**
le conducteur de chaleur (20) est en contact avec une deuxième isolation thermique placée sur l'élément de construction de liaison (6) et/ou intégrée dans l'élément de construction de liaison (6), laquelle dispose d'une résistance au passage de la chaleur supérieure à l'élément de construction de liaison (6).

16. Procédé selon l'une des revendications 12 à 15, **caractérisé en ce que** la première et/ou
la deuxième isolation thermique (12, 26) présentent une résistance au passage de la chaleur minimum de 0,30 K m²/ W et/ou une conductivité thermique maximum de 40 mW / (m K).

17. Procédé selon l'une des revendications 12 à 16, **caractérisé en ce que**
la première et/ou la deuxième isolation thermique (12, 26) comprennent ou se composent au moins partiellement de matériaux sélectionnés parmi des matières plastiques moussées ou expansées ; de la laine minérale ou des fibres minérales ; des mousses minérales ; du silicate de calcium léger ; des panneaux d'isolation sous vide ; des aérogels ; des acides siliciques précipités ou pyrogènes ; des microfibres creuses ; des matériaux isolants à base de cellulose ou d'acide polylactique ; des plaques de liège ou du liège ; de la laine de mouton ; ainsi que des produits fibreux végétaux.

18. Procédé selon l'une des revendications 12 à 17, **caractérisé en ce que**
la première section (22) du conducteur de chaleur (20) ou le premier bras de la cornière d'angle présentent une longueur dans la plage de 1 à 25 cm, et **en ce que** la deuxième section (24) du conducteur thermique (20) ou le deuxième bras de la cornière d'angle présentent une longueur dans la plage de 3 à 25 cm, et/ou **en ce que** la première et/ou la deuxième section (24) du conducteur thermique (20) et/ou le premier et/ou le deuxième bras de la cornière d'angle présentent une épaisseur moyenne dans la plage de 0,2 à 5 mm.

19. Procédé selon l'une des revendications 12 à 18, **caractérisé en ce que**
le conducteur de chaleur (20) comprend du métal sous la forme d'une tôle métallique non perforée ou d'une feuille métallique non perforée, d'une tôle métallique perforée, d'un filet métallique, d'un tissu métallique et/ou d'un non-tissé de métal, ou en est composé.

20. Procédé selon la revendication 19, **caractérisé en ce que**
le conducteur de chaleur (20) comprend ou représente une tôle d'acier, une tôle d'aluminium ou une tôle de cuivre, ou **en ce que** le conducteur de chaleur (20) comprend ou représente une tôle d'acier, une tôle d'aluminium ou une tôle de cuivre ajourées.

21. Procédé selon l'une des revendications 12 à 20, **caractérisé en ce que**
le conducteur de chaleur (20) dispose d'une capacité de transport de la chaleur (produit de l'épaisseur de matériau moyenne et de la conductivité thermique) d'au moins 20 mW/K.

22. Procédé selon l'une des revendications 12 à 21, **caractérisé en ce qu'** une couche de crépi (14) est appliquée sur le conducteur de chaleur (20), ou **en ce que** le conducteur de chaleur (20) est incorporé à au moins une couche de crépi (14), et/ou **en ce que** la première et/ou la deuxième isolation thermique (12, 26), du côté intérieur, et/ou l'élément de construction de liaison (6) comprennent au moins une couche de crépi (14).

23. Procédé selon l'une des revendications 12 à 22, **caractérisé en ce que** le conducteur de chaleur (20) s'étend essentiellement sur toute la longueur ou hauteur de la première isolation thermique (12) dans la zone d'angle (23) de la première isolation thermique et de l'élément de construction de liaison (6).

24. Procédé selon l'une des revendications 12 à 23, **caractérisé en ce que** l'élément de construction de liaison (6) fait partie intégrante d'une salle de bains ou d'une salle d'eau.
